# EUROPÄISCHE PATENTANMELDUNG

(11) **EP 4 357 874 A2**
(43) Veröffentlichungstag der Anmeldung: **24.04.2024**
(21) Anmeldenummer: 24161335.5
(22) Anmeldetag: 03.05.2022
(51) Int. Cl.: G05D 16/10

(54) **VENTILANORDNUNG**

(30) Priorität: 03.05.2021 DE 102021002304; 10.05.2021 DE 102021002454
(62) Teilanmeldung aus: 22171236.7
(71) Anmelder: Suttner GmbH, 33818 Leopoldshöhe (DE)
(72) Erfinder: Mertin, Iwan, 32049 Herford (DE)
(74) Vertreter: Von Rohr Patentanwälte Partnerschaft mbB

(57) **Zusammenfassung**

Die Erfindung betrifft eine Ventilanordnung, insbesondere eine Sicherheitsventilanordnung oder eine Umlaufventilanordnung, die gesteuert vom Flüssigkeitsdruck öffnet und schließt. Vorschlagsgemäß ist eine Druckfeder, die ein Ventilelement gegen einen Ventilsitz vorspannt, als Stempelfeder ausgebildet. Gemäß einem weiteren Aspekt kann die Ventilanordnung ein Zwischenelement aufweist, über das die Vorspannkraft der Feder auf das Ventilelement übertragbar ist, wobei das Zwischenelement gegen ein Drehen um eine Längs- bzw. Schrauben-Aachse der Feder gesichert ist. Gemäß einem weiteren Aspekt ist stromab des Ventilsitzes eine Querschnittsverengung vorgesehen, um ein Abheben des Ventilelements vom Ventilsitz zu unterstützen.

## Beschreibung

Die vorliegende Erfindung betrifft eine Ventilanordnung gemäß Oberbegriff des Anspruchs 1 sowie eine Hochdruckreinigungsvorrichtung.

Insbesondere betrifft die vorliegende Erfindung Sicherheitsventilanordnungen und Umlaufventilanordnungen. Die erfindungsgemäße Ventilanordnung kann jedoch auch für andere Anwendungen eingesetzt werden und vorteilhaft sein.

Sicherheitsventile dienen dazu, ein hydraulisches System gegen einen ungewollten Überdruck zu schützen. Sie werden daher auch als Überdruckventile bzw. Druckbegrenzungsventile bezeichnet. Diese Begriffe sind im Folgenden daher vorzugsweise als synonym zu verstehen.

Sicherheitsventilanordnungen werden insbesondere bei Kolbenpumpen, wie einer Hochdruckreinigungsvorrichtung bzw. Wasserstrahlreinigungsvorrichtung, verwendet.

Das Öffnen und Schließen einer Sicherheitsventilanordnung ist vorzugsweise durch den herrschenden Flüssigkeits- bzw. Wasserdruck gesteuert bzw. geregelt.

Im Normalbetrieb, insbesondere also bei üblichem Betriebsdruck, ist die Sicherheitsventilanordnung vorzugsweise geschlossen. Sobald ein bestimmter, sogenannter Ansprechdruck erreicht bzw. überschritten wird, öffnet die Sicherheitsventilanordnung. Das Öffnen erfolgt also vorzugsweise, wenn ein kritischer Druck oberhalb des Betriebsdrucks erreicht bzw. überschritten ist, insbesondere bei einem ungewünschten bzw. unzulässigen Druckanstieg. Über die geöffnete Sicherheitsventilanordnung kann dann Fluid aus dem System abgeleitet bzw. umgeleitet werden, insbesondere also der Druck wieder gesenkt werden.

Vorzugsweise schließt die Ventilanordnung (wieder), sobald der Druck unter einen bestimmten Wert gefallen ist, den sogenannten Schließdruck. Der Schließdruck entspricht dem Ansprechdruck oder liegt unterhalb des Ansprechdrucks.

Übliche, aus dem Stand der Technik bekannte Sicherheitsventilanordnungen umfassen eine Spiralfeder, die direkt auf einen Kolben drückt und diesen gegen einen Ventilsitz presst bzw. spannt. Die Sicherheitsventilanordnung öffnet, wenn der Fluiddruck auf den Kolben den durch die Feder ausgeübten Druck überschreitet bzw. überwindet. Die Feder ist mit einer Hülse eingehaust, wobei sich die Hülse drehen lässt, um die Vorspannkraft der Feder und somit den Ansprechdruck zu verstellen bzw. einzustellen. Alternativ, insbesondere bei sehr großen Hülsen, wird eine Einstellschraube verbaut. Die Hülse ist dann fest und die Feder wird über die Einstellschraube gespannt.

Die vorliegende Erfindung betrifft auch sogenannte Umlaufventile, die auch als Bypassventile oder Unloader-Ventile bezeichnet werden. Diese Begriffe sind im Folgenden daher vorzugsweise als synonym zu verstehen.

Vorzugsweise sperrt und öffnet eine Umlaufventilanordnung ebenfalls in Abhängigkeit vom herrschenden Flüssigkeits- bzw. Wasserdruck, hat also vorzugsweise eine zumindest ähnliche Funktionsweise wie eine Sicherheitsventilanordnung und damit einhergehend vorzugsweise auch einen ähnlichen Aufbau.

Vorzugsweise dient eine Umlaufventilanordnung als Druckminderer und/oder um eine Pumpe in einen Leerlauf zu schalten. Eine Umlaufventilanordnung dient vorzugsweise dazu, einen Druck herunterzuregeln und/oder einen Fluidstrom, insbesondere wenn er nicht benötigt wird, umzuleiten bzw. abzuleiten. Der Betrieb, bei dem eine solche Umleitung erfolgt, wird auch als Bypassbetrieb oder Leerlaufbetrieb bezeichnet. Eine Umlaufventilanordnung hat vorzugsweise mindestens zwei Funktionen, nämlich eine Pumpe in den Leerlauf zu schalten und den Druck herunterzuregeln bzw. zu mindern.

Beispielsweise wird bei einer Hochdruckreinigungsvorrichtung eine Flüssigkeit, insbesondere Wasser, durch eine Pumpe unter Druck gesetzt und üblicherweise über eine angeschlossene Ventilpistole ausgegeben, insbesondere für Reinigungszwecke. Wird die Ventilpistole geschlossen, weil (temporär) keine weitere Abgabe von Flüssigkeit gewünscht ist, so müsste die Pumpe gegen die geschlossene Ventilpistole arbeiten. Um dies zu Verhindern, wird vorzugsweise eine Umlaufventilanordnung eingesetzt, die den Flüssigkeitsstrom umleitet, insbesondere zurück zur Pumpe, besonders bevorzugt so dass die Flüssigkeit in einem Kreislauf förderbar ist.

Eine aus dem Stand der Technik bekannte Umlaufventilanordnung ist beispielsweise in der EP 1 854 558 A2 beschrieben. Die Anordnung hat einen Einlass, einen Auslass und eine Bypassleitung. Zwischen dem Einlass und Auslass ist ein Rückschlagventil angeordnet, das bei Normalbetrieb geöffnet ist, so dass Flüssigkeit vom Einlass, insbesondere einer an den Einlass angeschlossenen Pumpe, zum Auslass, insbesondere einer am Auslass angeschlossenen Ventilpistole, fließen kann. Die Bypassleitung ist im Normalbetrieb verschlossen. Hierfür ist ähnlich zu einer Sicherheitsventilanordnung eine Spiralfeder vorgesehen, die eine Kolbenstange gegen einen Ventilsitz vorspannt, hier insbesondere gegen den Ventilsitz zieht.

Bei Schließen der Ventilpistole, also Zusammenbrechen der Flüssigkeitsströmung, schließt das Rückschlagventil. Gleichzeitig entsteht stromab des Rückschlagventils ein Druckimpuls, der auf die Kolbenstange wirkt, so dass diese vom Ventilsitz abgehoben wird und sich die Bypassleitung öffnet. In diesem Bypassbetrieb bzw. Leerlaufbetrieb bleibt das Rückschlagventil geschlossen und das Bypassventil geöffnet und wird die Flüssigkeit von der Pumpe im Kreislauf durch die Bypassleitung gepumpt, sofern die Pumpe nicht abgeschaltet wird. Wird die Ventilpistole wieder geöffnet, ändern sich die Druckverhältnisse an der Umlaufventilanordnung entsprechend, so dass sich das Bypassventil wieder schließt und das Rückschlagventil öffnet.

Wie auch bei Sicherheitsventilanordnungen ist die Feder bei Umlaufventilanordnungen üblicherweise mit einer Hülse eingehaust, wobei sich die Hülse drehen lässt, um die Vorspannkraft der Feder zu verstellen. Insbesondere wird hierdurch der Ansprechdruck, also der Druck bei dem das Bypassventil öffnet, derart angepasst, dass die Bypassleitung im Normalbetrieb geschlossen und im Leerlaufbetrieb geöffnet ist. Alternativ, insbesondere bei sehr großen Hülsen, wird eine Einstellschraube verbaut. Die Hülse ist dann fest und die Feder wird über die Einstellschraube gespannt.

Bei den aus dem Stand der Technik bekannten Ventilanordnungen, insbesondere Sicherheitsventilanordnungen und Umlaufventilanordnungen, besteht das Problem, dass die verwendeten Spiralfedern auf Grund ihrer Eigenschaften schräg auf den am Ventilsitz dichtenden Ventilkolben drücken. Dies führt insbesondere zu einem einseitigen Verschleiß des Ventilkolbens und einer geringeren Dichtwirkung.

Eine mögliche, aus dem Stand der Technik bekannte, Lösung ist, auf Kugeln gelagerte Druckteller einzusetzen, um die Federkraft in Wirkrichtung des Ventilkolbens zu richten, damit dieser nicht im Gehäuse kippt. Es besteht jedoch weiterhin das Problem, dass beim Verstellen der Federvorspannung, also beim Drehen der Einstellhülse, sich der Ventilkolben mit der Feder mitdrehen kann. Dies führt zu einem verstärkten Verschleiß der Flächen am Ventilsitz und einer kürzeren Lebensdauer der Ventilanordnung.

Ferner kann sich unterhalb der Einstellhülse Wasser sammeln, was zu einem Korrodieren der Feder und wiederum einer verkürzten Lebensdauer führen kann.

Insbesondere Sicherheitsventil- und/oder Umlaufventilanordnungen sollten zuverlässig und definiert bei dem eingestellten Ansprechdruck öffnen. Bei Verschleiß kann dies nicht mehr gewährleistet werden.

Ein weiteres Problem ist, dass bei den aus dem Stand der Technik bekannten Ventilanordnungen üblicherweise nur ein geringer Hub, also ein geringes Abheben des Ventilkolbens von dem Ventilsitz, erfolgt. Das liegt beispielsweise daran, dass wegen zu großer Reibkraft zwischen Kolbenstange und einer Führung für die Kolbenstange kein voller Hub erreicht werden kann. Der geringe Hub hat zur Folge, dass der Öffnungsquerschnitt am Ventilsitz, und entsprechend der Ventilkolbendurchmesser, vergrößert werden müssen, um einen ausreichenden Volumenstrom zu erzielen. Dies hat eine größere Bauweise und eine geringere Dichtwirkung zur Folge, da die Federkraft auf eine größere Dichtfläche wirken muss.

Es ist eine Aufgabe der Erfindung, eine Ventilanordnung und eine Hochdruckreinigungsvorrichtung mit einer Ventilanordnung anzugeben, wobei die Ventilanordnung einen geringen Verschleiß und/oder einen einfachen, kompakten, ressourcenschonenden bzw. kostengünstigen Aufbau hat.

Die Aufgabe wird gelöst durch eine Ventilanordnung gemäß Anspruch 1 oder durch eine Hochdruckreinigungsvorrichtung gemäß Anspruch 10. Vorteilhafte Weiterbildungen sind Gegenstand der Unteransprüche.

Eine vorschlagsgemäße Ventilanordnung, die beispielsweise eine Sicherheitsventilanordnung oder eine Umlaufventilanordnung sein kann, weist einen Einlass, einen Ablass und einen zwischen Einlass und Ablass angeordneten Ventilsitz auf.

Die vorschlagsgemäße Ventilanordnung weist ein Ventilelement und eine Feder auf. Mittels der Feder ist das Ventilelement, insbesondere bei Betriebsdruck, in eine Schließstellung gegen den Ventilsitz mit einer Vorspannkraft vorgespannt bzw. vorspannbar. Eine Fluidverbindung zwischen Einlass und Ablass ist dann vorzugsweise gesperrt bzw. unterbrochen.

Das Ventilelement ist vorzugsweise in eine Offenstellung vom Ventilsitz abhebbar, so dass Einlass und Ablass fluidisch miteinander verbunden sind, insbesondere wenn ein Fluiddruck bzw. Flüssigkeitsdruck an der Ventilanordnung einen Ansprechdruck überschreitet. Bevorzugt weist die Ventilanordnung hierzu einen Betätigungsraum auf, in dem der Flüssigkeitsdruck ansteht.

Die Ventilanordnung weist vorzugsweise eine Verstelleinrichtung, auch Einstelleinrichtung genannt, auf, mittels der die von der Feder ausgeübte Vorspannkraft verstellbar bzw. einstellbar ist, insbesondere mittels der die Feder gestaucht oder gestreckt werden kann, vorzugsweise durch Drehen der Einstelleinrichtung bzw. Verstelleinrichtung, besonders bevorzugt um eine Symmetrieachse der Feder. Das Verstellen bzw. Einstellen der Vorspannkraft der Feder bewirkt vorzugsweise eine Anpassung bzw. Änderung des Ansprechdrucks.

Gemäß einem Aspekt der vorliegenden Erfindung ist die Feder als Stempelfeder ausgebildet. Unter einer Stempelfeder ist hierbei eine insbesondere zylindrische Schraubenfeder bzw. Druckfeder zu verstehen, deren Drahtquerschnitt oval oder rechteckig, aber nicht kreisförmig, ist. Andere geläufige Begriffe für diesen Federtyp sind Werkzeugfeder und Systemfeder.

Die Feder unterscheidet sich somit von den üblichen Spiralfedern bei den bekannten Ventilanordnungen des Stands der Technik durch ihren nicht-runden bzw. nichtkreisförmigen Drahtquerschnitt. Dies hat den Vorteil, dass die Querschnittsfläche der Feder größer ist als bei herkömmlichem runden Draht, wodurch mehr Kraft erzeugt werden kann. Dies ist einer kompakteren Bauweise zuträglich.

Zudem setzt sich eine Stempelfeder weniger stark als eine Spiralfeder mit kreisförmigem Drahtquerschnitt. Unter "Setzen" ist insbesondere eine irreversible Verformung der Feder und/oder Verringerung der ungespannten Länge der Feder zu verstehen, die bei Alterung der Feder auftritt, insbesondere wenn diese höheren Belastungen ausgesetzt ist. Hierdurch verringert sich die Vorspannkraft der Feder mit der Zeit. Durch die erfindungsgemäße Ventilanordnung mit Stempelfeder kann damit ein genauerer bzw. gleichbleibender Ansprechdruck auch über einen längeren Zeitraum erzielt werden und/oder Abweichungen des Ansprechsdrucks über die Lebensdauer der Ventilanordnung vermindert werden. Dies ist einem geringeren Verschleiß bzw. einer verlängerten Lebensdauer der Ventilanordnung und/oder einem zuverlässigen und definierten Öffnen bei dem eingestellten Ansprechdruck zuträglich.

Besonders bevorzugt ist die Ventilanordnung ohne Einhausung der Feder bzw. ohne Federgehäuse oder Federhülse/Einstellhülse ausgebildet und/oder ist die Feder (zumindest im Wesentlichen) frei von einer Einhausung, einem Federgehäuse bzw. einer Federhülse/Einstellhülse. Vorzugsweise liegt die Feder (zumindest teilweise) frei bzw. offen, insbesondere zu ihrer Umgebung bzw. zur Atmosphäre, bzw. ist (von außen) frei zugänglich. Dies hat den Vorteil, dass auftretende Feuchtigkeit von der Feder abtrockenen kann, so dass ein Rosten bzw. Korrodieren der Feder vermieden oder zumindest vermindert wird. Zudem werden weniger Bauteile benötigt, was einem einfacheren bzw. kompakteren Aufbau zuträglich ist.

Gemäß einem weiteren Aspekt der vorliegenden Erfindung, der auch unabhängig realisiert sein kann, weist die Ventilanordnung ein Zwischenelement auf, das zwischen der Feder und dem Ventilelement angeordnet ist bzw. über das die Vorspannkraft der Feder auf das Ventilelement übertragbar ist. Vorschlagsgemäß ist das Zwischenelement gegen ein Drehen um eine Symmetrie- bzw. Längsachse der Feder, eine Symmetrie- bzw. Längsachse des Ventilelements und/oder eine in Öffnungsrichtung des Ventilelements verlaufende Achse, und/oder gegen ein Drehen beim Verstellen der Feder bzw. Betätigen der Einstelleinrichtung bzw. Verstelleinrichtung, gesichert bzw. entsprechend drehfest gelagert. Insbesondere wird durch das Zwischenelement eine Verdrehsicherung des Ventilelements realisiert. In vorteilhafter Weise wird durch das Zwischenelement vermieden, dass sich eine Drehbewegung beim Betätigen der Einstelleinrichtung bzw. Verstelleinrichtung bzw. beim Einstellen der Vorspannkraft bzw. des Ansprechdrucks auf das Ventilelement überträgt. Somit wird der Verschleiß der Flächen am Ventilsitz vermindert.

Die Vorspannkraft der Feder wird durch das Zwischenelement vorzugsweise auf das Ventilelement umgelenkt bzw. zentriert. Insbesondere wirkt die Vorspannkraft nur in axialer Richtung bzw. in Schließrichtung auf das Ventilelement. In vorteilhafter Weise können so unerwünschte Querkräfte auf das Ventilelement vermieden werden, die einerseits die Schließkraft mindern und andererseits zu einem einseitigen Verschleiß führen.

Gemäß einem weiteren Aspekt der vorliegenden Erfindung, der auch unabhängig realisiert sein kann, weist eine (Ablass-)Leitung zwischen Ventilsitz und Ablass, insbesondere stromabwärts unmittelbar hinter dem Ventilsitz, eine Querschnittsverengung bzw. Düse auf.

Durch die Querschnittsverengung bzw. Düse wirkt bei abgehobenem Ventilelement vorzugsweise ein zusätzlicher bzw. größerer Druck auf das Ventilelement, insbesondere stirnseitig, als dies bei einer Ventilanordnung ohne entsprechende Querschnittsverengung der Fall wäre. Vorzugsweise wird durch die Querschnittsverengung ein Staudruck am Ventilsitz erzeugt, wodurch ein (vollständiges) Abheben des Ventilelements vom Ventilsitz bzw. ein (vollständiges) Öffnen der Ventilanordnung unterstützt wird. Durch die Querschnittsverengung wirkt besonders bevorzugt zumindest im Wesentlichen vollflächig eine Kraft bzw. ein Druck auf die Stirnfläche des Ventilelements in Öffnungsrichtung bzw. entgegen der Vorspannkraft der Feder. Im Unterschied hierzu wirkt bei einer Ventilanordnung ohne Querschnittsverengung im Wesentlichen nur eine Kraft bzw. ein Druck auf den in Schließstellung am Ventilsitz anliegenden ringförmigen Bereich der Stirnfläche.

Durch die vorschlagsgemäße Ausbildung einer Querschnittsverengung bzw. Düse kann ein größerer Hub des Ventilelements als bei einer Leitung ohne Verengung bzw. mit gleichbleibendem Durchmesser erreicht werden, besonders bevorzugt ein vollständiger Hub. Insbesondere kann - bei gleichem Volumenstrom - durch einen größeren Hub der Durchmesser des Ventilsitzes und des Ventilelements verkleinert werden. Dies ist einer kompakten, ressourcenschonenden bzw. kostengünstigen Bauweise zuträglich.

Das Abheben des Ventilelements kann auf verschiedene Arten erfolgen. Beispielsweise kann der Flüssigkeitsdruck direkt am Ventilelement anstehen. Eine Betätigung der Ventilanordnung bzw. des Ventilelements erfolgt dann vorzugsweise durch den auf das Ventilelement direkt wirkenden Flüssigkeitsdruck.

Zusätzlich oder alternativ ist es möglich, dass die Betätigung mittelbar erfolgt. Insbesondere kann die Ventilanordnung einen Kolben oder sonstiges Betätigungselement umfassen, der/das bei Erreichen bzw. Überschreiten des Ansprechdrucks das Ventilelement entgegen der Vorspannkraft der Feder vom Ventilsitz drückt.

Die vorgenannten Aspekte können sowohl bei einer Sicherheitsventilanordnung als auch einer Umlaufventilanordnung, aber auch bei sonstigen Ventilanordnungen realisiert und vorteilhaft sein.

Die Ventilanordnung kann zusätzlich zu dem Einlass und dem Ablass auch einen Auslass aufweisen, insbesondere wenn es sich um eine Umlaufventilanordnung handelt. Vorzugsweise sind im Normalbetrieb Einlass und Auslass fluidisch miteinander verbunden und im Leerlaufbetrieb Einlass und Ablass, insbesondere wie eingangs beschrieben. Besonders bevorzugt ist zwischen Einlass und Auslass ein Rückschlagventil angeordnet, um im Leerlaufbetrieb die Fluidverbindung zwischen Einlass und Auslass zu trennen.

Vorzugsweise ist die vorschlagsgemäße Ventilanordnung für Hochdruckvorrichtungen ausgelegt, insbesondere Vorrichtungen, bei denen der übliche Betriebsdruck mindestens 50 bar oder 100 bar beträgt. Besonders bevorzugt beträgt der an der Ventilanordnung einstellbare (minimale) Ansprechdruck mehr als 50 bar. Vorzugsweise sind bei der vorschlagsgemäßen Ventilanordnung Ansprechdrücke von mehr als 100 bar, 200 bar, 500 bar und/oder 700 bar einstellbar. Es ist jedoch auch möglich, Ansprechdrücke von weniger als 50 bar vorzusehen, beispielsweise von mindestens 10 bar, insbesondere mindestens 20 bar.

Die vorschlagsgemäße Ventilanordnung hat vorzugsweise eine Masse bzw. ein Gewicht von weniger als 1,5 kg, insbesondere weniger als 1 kg, und/oder von mehr als 0,3 kg oder 0,4 kg, besonders bevorzugt von etwa 0,6 kg. Insbesondere kann die vorschlagsgemäße Ventilanordnung mit weniger Bauteilen bzw. Materialeinsatz und/oder leichter als die üblichen aus dem Stand der Technik bekannten Ventilanordnungen hergestellt werden bzw. ausgebildet sein.

Ein weiterer Aspekt der vorliegenden Erfindung betrifft eine Hochdruckreinigungsvorrichtung mit einer vorschlagsgemäßen Ventilanordnung. Hierdurch können entsprechende Vorteile erzielt werden.

Eine Hochdruckreinigungsvorrichtung ist vorzugsweise eine Vorrichtung, bei der eine Flüssigkeit, insbesondere Wasser, unter Hochdruck abgegeben wird, insbesondere zu Reinigungszwecken. Der Flüssigkeitsdruck liegt hierbei vorzugsweise bei mindestens 50 bar, vorzugsweise 100 bar bis 500 bar oder mehr.

Besonders bevorzugt weist eine vorschlagsgemäße Hochdruckreinigungsvorrichtung mindestens zwei vorschlagsgemäße Ventilanordnungen auf, wobei es sich bei einer der Ventilanordnungen um eine Umlaufventilanordnung und bei der anderen der Ventilanordnungen um eine Sicherheitsventilanordnung handelt.

Die oben genannten Aspekte und Merkmale sowie weitere sich aus den Ansprüchen und der nachfolgenden Beschreibung ergebende Aspekte und Merkmale können unabhängig voneinander, aber auch in verschiedenen Kombinationen realisiert werden.

Weitere Vorteile, Aspekte, Merkmale und Eigenschaften der vorliegenden Erfindung ergeben sich aus den Ansprüchen und der folgenden Beschreibung bevorzugter Ausführungsformen anhand der Zeichnung. Es zeigt:
- Fig. 1: eine schematische Seitenansicht einer vorschlagsgemäßen Ventilanordnung gemäß einer ersten Ausführungsform in Schließstellung;
- Fig. 2: eine schmatische Seitenansicht der Ventilanordnung gemäß Fig. 1 in einer um 90° gedrehten Darstellung;
- Fig. 3: einen schematischen Schnitt der Ventilanordnung gemäß der ersten Ausführungsform in Schließstellung;
- Fig. 4: einen schematischen Schnitt der Ventilanordnung gemäß der ersten Ausführungsform in Offenstellung;
- Fig. 5: eine schematische Seitenansicht der vorschlagsgemäßen Ventilanordnung gemäß einer zweiten Ausführungsform;
- Fig. 6: einen schematischen Schnitt der Ventilanordnung gemäß der zweiten Ausführungsform in Schließstellung;
- Fig. 7: einen schematischen Schnitt der Ventilanordnung gemäß der zweiten Ausführungsform in Offenstellung;
- Fig. 8: eine schematische Seitenansicht der vorschlagsgemäßen Ventilanordnung gemäß einer dritten Ausführungsform;
- Fig. 9: einen schematischen Schnitt der Ventilanordnung gemäß der dritten Ausführungsform in Schließstellung;
- Fig. 10: einen schematischen Schnitt der Ventilanordnung gemäß der dritten Ausführungsform in Offenstellung;
- Fig. 11: eine schematische Seitenansicht der vorschlagsgemäßen Ventilanordnung gemäß einer vierten Ausführungsform;
- Fig. 12: einen schematischen Schnitt der Ventilanordnung gemäß der vierten Ausführungsform in Schließstellung;
- Fig. 13: einen schematischen Schnitt der Ventilanordnung gemäß der vierten Ausführungsform in Offenstellung; und
- Fig. 14: eine blockschaltbildartige Ansicht einer vorschlagsgemäßen Hochdruckreinigungsvorrichtung.

In den Figuren werden für dieselben oder ähnliche Teile dieselben Bezugszeichen verwendet, wobei entsprechende oder vergleichbare Vorteile und Eigenschaften erreicht werden können, auch wenn von einer wiederholten Beschreibung dieser abgesehen wird.

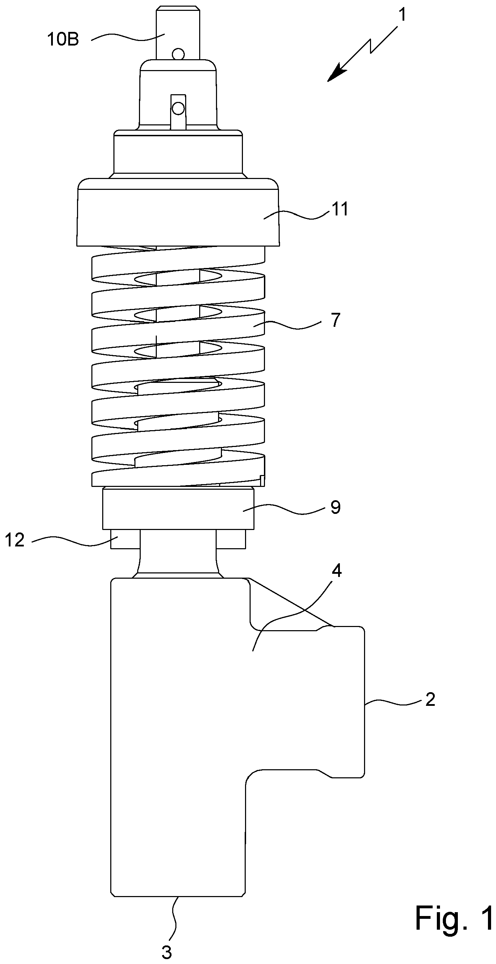

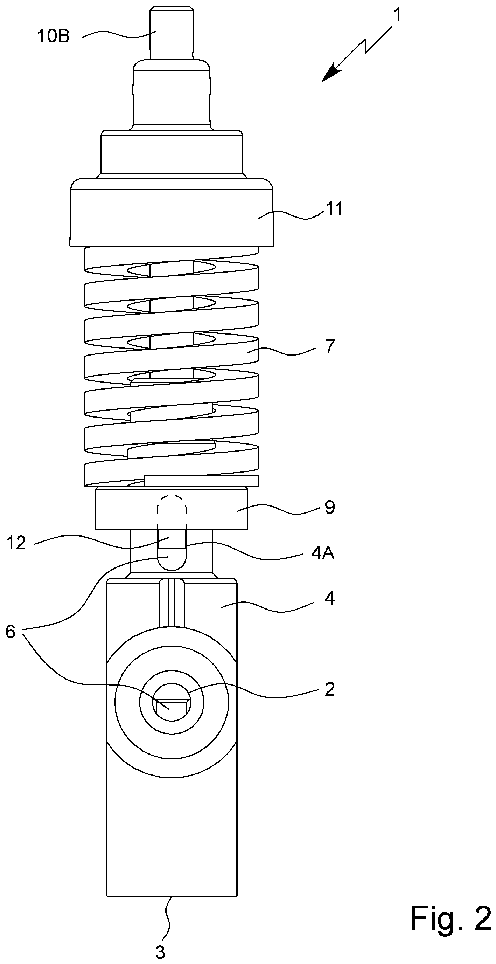

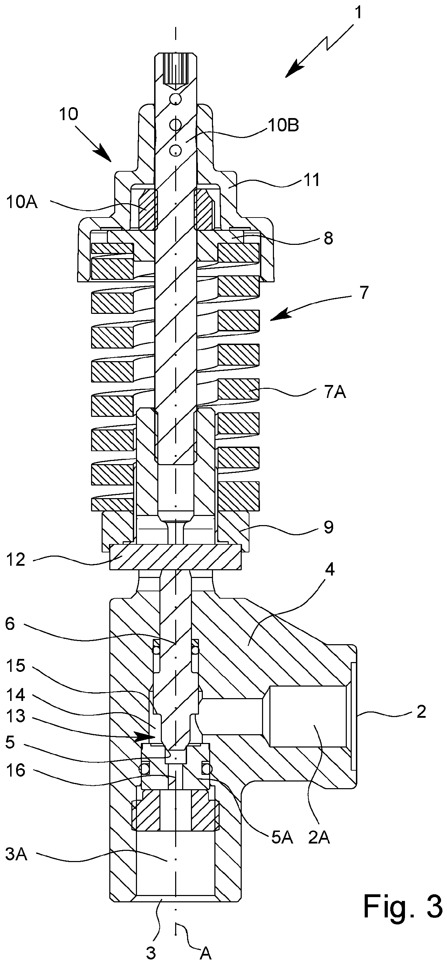

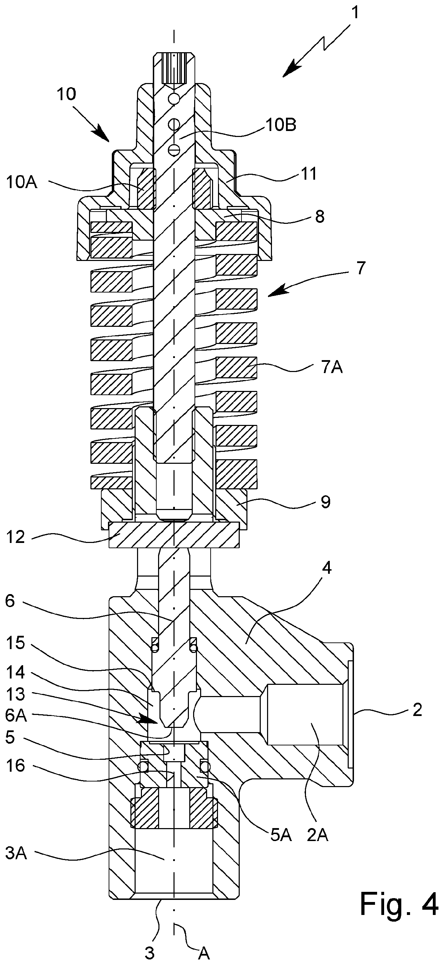

Fig. 1 bis 4 zeigen eine vorschlagsgemäße Ventilanordnung 1 gemäß einer ersten Ausführungsform. In Fig. 1 ist die Ventilanordnung 1 in einer schematischen Seitenansicht dargesellt und in Fig. 2 in einer dazu um 90° gedrehten Ansicht. Fig. 3 zeigt einen schematischen Schnitt der Ventilanordnung 1. In den Fig. 1 bis 3 ist die Ventilanordnung 1 in Schließstellung dargestellt. Fig. 4 zeigt einen Schnitt korrespondierend zu Fig. 3 mit der Ventilanordnung 1 in Offenstellung.

Die Ventilanordnung 1 weist vorzugsweise einen Einlass 2 und einen Ablass 3 auf.

Beim Darstellungsbeispiel gemäß Fig. 1 bis 4 sind der Einlass 2 und/oder der Ablass 3 insbesondere als Anschlüsse ausgebildet, an die Schläuche bzw. Leitungen anschließbar sind. Vorzugsweise weisen der Einlass 2 und/oder Ablass 3 entsprechende Anschlusseinrichtungen, wie Gewinde, Schnellkupplungen oder dergleichen, auf.

Besonders bevorzugt weist die Ventilanordnung 1 gemäß erster Ausführungsform genau zwei Anschlüsse, gebildet durch den Einlass 2 und den Ablass 3, auf.

Vorzugsweise sind der Einlass 2 und der Ablass 3 an einem (gemeinsamen) Hauptkörper bzw. Gehäuse 4 der Ventilanordnung 1 angeordnet bzw. gebildet.

Der Einlass 2 und der Ablass 3 sind vorzugsweise fluidisch verbunden oder verbindbar, insbesondere über eine Einlassleitung 2A und/oder eine Ablassleitung 3A.

Die Einlassleitung 2A ist vorzugsweise hinter bzw. stromabwärts des Einlasses 2 und/oder vor bzw. stromaufwärts des Ablasses 3 bzw. der Ablassleitung 3A angeordnet bzw. gebildet. Die Ablassleitung 3A ist vorzugsweise vor bzw. stromaufwärts des Ablasses 3 und/oder hinter bzw. stromabwärts des Einlasses 2 bzw. der Einlassleitung 2A angeordnet bzw. gebildet.

Die Begriffe "stromabwärts" und "stromaufwärts" beziehen sich hier und im Folgenden auf die übliche Strömungsrichtung von Flüssigkeit, insbesondere Wasser, beim Betrieb der Ventilanordnung 1 (wenn diese geöffnet ist), bei der die Flüssigkeit die Ventilanordnung 1 vom Einlass 2 zum Ablass 3 durchströmt.

Vorzugsweise sind die Einlassleitung 2A und/oder die Ablassleitung 3A im Hauptkörper bzw. Gehäuse 4 gebildet.

Beim Darstellungsbeispiel sind der Einlass 2 und der Ablass 3 bzw. deren Öffnungsrichtungen bzw. die Einlassleitung 2A und die Ablassleitung 3A vorzugsweise quer, insbesondere senkrecht, zueinander angeordnet. Hier sind jedoch auch andere Lösungen möglich.

Zwischen dem Einlass 2 und Ablass 3, insbesondere der Einlassleitung 2A und Ablassleitung 3A, ist vorzugsweise ein Ventilsitz 5 angeordnet bzw. gebildet.

Der Ventilsitz 5 kann direkt im bzw. durch den Hauptkörper bzw. das Gehäuse 4 und/oder die Einlassleitung 2A bzw. Ablassleitung 3A gebildet sein, oder, wie in Fig. 3 und 4 dargestellt, durch einen Einsatz 5A.

Der Einsatz 5A ist vorzugsweise dichtend bzw. formschlüssig in der Einlassleitung 2A und/oder Ablassleitung 3A angeordnet bzw. festgelegt. Beim Darstellungsbeispiel gemäß Fig. 3 und 4 ist der Einsatz 5A mittels eines Gegenstücks festgelegt, insbesondere wobei das Gegenstück in einen Schraubkanal der Ablassleitung 3A eingeschraubt ist. Hier sind jedoch auch andere Lösungen möglich.

Die Ventilanordnung 1 weist vorzugsweise ein Ventilelement 6 auf, das in Schließstellung, wie insbesondere in Fig. 3 dargestellt, dichtend an dem Ventilsitz 5 anliegt. Die Anlagefläche ist vorzugsweise ringförmig.

Unter der "Schließstellung" der Ventilanordnung 1 ist vorzugsweise die Stellung zu verstehen, in der das Ventilelement 6 dichtend an dem Ventilsitz 5 anliegt. In der Schließstellung ist die Fluidverbindung zwischen Einlass 2 und Ablass 3, insbesondere Einlassleitung 2A und Ablassleitung 3A, unterbrochen bzw. gesperrt bzw. blockiert, insbesondere durch die dichtende Anlage des Ventilelements 6 am Ventilsitz 5.

Das Ventilelement 6 ist vorzugsweise beweglich gelagert bzw. vom Ventilsitz 5 abhebbar, so dass eine Fluidverbindung zwischen Einlass 2 und Ablass 3, insbesondere Einlassleitung 2A und Ablassleitung 3A, geöffnet, freigegeben bzw. hergestellt wird. Die Stellung, bei der das Ventilelement 6 (vollständig) vom Ventilsitz 5 abgehoben bzw. wegbewegt ist, wird im Folgenden als "Offenstellung" der Ventilanordnung 1 bezeichnet. Diese ist in Fig. 4 gezeigt, worauf später noch genauer eingegangen wird.

Beim Darstellungsbeispiel gemäß Fig. 1 bis 4 ist das Ventilelement 6 länglich bzw. zylindrisch bzw. als Kolben ausgebildet. Hier sind jedoch auch andere Lösungen möglich.

Das Ventilelement 6 ist vorzugsweise dichtend in dem Hauptkörper bzw. Gehäuse 4 geführt.

Die Ventilanordnung 1 weist vorzugsweise ein Spannelement bzw. eine Feder 7 auf. Mittels der Feder 7 ist die Ventilanordnung 1 bzw. das Ventilelement 6 vorzugsweise in die Schließstellung bzw. gegen den Ventilsitz 5 (vor)gespannt.

Die Feder 7 ist vorzugsweise eine Schraubenfeder bzw. eine Feder, bei der ein Federdraht 7A in Schraubenform und/oder wendelförmig aufgewickelt bzw. gewunden ist. Insbesondere handelt es sich bei der Feder 7 um eine (Schrauben-) Druckfeder bzw. gewundene Torsionsfeder. Bei Einwirkung einer äußeren Belastung, insbesondere in Richtung der (Schrauben-) Achse A der Feder 7 bzw. Zusammendrücken der Feder 7, wird der Federdraht 7A vorzugsweise auf Torsion beansprucht und es wirkt eine entgegengerichtete Kraft.

Die Windungssteigung der Feder 7 ist vorzugsweise gleichbleibend bzw. konstant.

Die Anzahl der Windungen der Feder 7 ist vorzugsweise größer als 4 oder 5, und/oder kleiner als 16, insbesondere kleiner als 12 oder 10.

Die Länge der Feder 7 beträgt vorzugsweise mehr als 4 cm, insbesondere mehr als 6 cm, und/oder weniger als 10 cm, insbesondere weniger als 8 cm.

Die Feder 7 ist vorzugsweise spiralförmig und/oder weist eine vorzugsweise zumindest im Wesentlichen zylindrische äußere Form auf. Es sind jedoch auch leicht konische Federn o. dgl. denkbar.

Die Feder 7 ist vorzugsweise aus einem Draht, insbesondere dem Federdraht 7A gewickelt, der einen ovalen oder rechteckigen Querschnitt aufweist bzw. dessen Querschnitt nicht kreisförmig ist, wie insbesondere in dem Schnitt gemäß Fig. 3 und 4 dargestellt. Unter dem Querschnitt ist hierbei insbesondere der Schnitt senkrecht zur (Längs-) Achse des Drahtes, insbesondere des Federdrahts 7A zu verstehen bzw. ein Schnitt entlang der (Längs-) Achse A bzw. Symmetrieachse bzw. Zylinderachse der Feder 7. Der Draht, insbesondere dem Federdraht 7A ist vorzugweise ein Vierkantdraht oder Profildraht, aber kein Runddraht.

Besonders bevorzugt weist die Feder 7 einen rechteckigen Drahtquerschnitt auf bzw. ist der Draht, insbesondere dem Federdraht 7A rechteckig.

Eine (Schrauben- bzw. Druck-)Feder mit ovalem bzw. rechteckigen Drahtquerschnitt, also mit nicht kreisförmigen bzw. runden Drahtquerschnitt wird auch als Stempelfeder, Werkzeugfeder bzw. Systemfeder bezeichnet. Die Feder 7 ist vorzugsweise eine Stempelfeder, Werzeugfeder bzw. Systemfeder.

Die Feder 7 ist vorzugsweise so an der Ventilanordnung 1 angeordnet, dass ihre (Längs- bzw. Feder-) Achse A der Öffnungs- bzw. Schließrichtung der Ventilanordnung 1 bzw. des Ventilelements 6 entspricht, und/oder dass eine Vorspannkraft der Feder 7 in Schließrichtung bzw. auf das Ventilelement 6 wirkt.

Die Begriffe "axial" und "radial" beziehen sich im Folgenden vorzugsweise auf die Achse A bzw. die durch die Öffnungs- und Schließrichtung der Ventilanordnung 1 festgelegte Achse A.

Beim Darstellungsbeispiel gemäß Fig. 1 bis 4 entspricht die Achse A der Feder 7 bzw. die Schließrichtung des Ventilelements 6 der Strömungsrichtung in der Ablassleitung 3A (bei geöffneter Ventilanordnung 1). Hier sind jedoch auch andere Lösungen möglich.

Die Feder 7 ist vorzugsweise vorgespannt bzw. mit einer Vorspannung gelagert.

Die Ventilanordnung 1 weist vorzugsweise an der dem Gehäuse 4 bzw. Ventilelement 6 abgewandten Seite der Feder 7 ein erstes Lagerelement 8 und/oder an der dem Gehäuse 4 bzw. Ventilelement 6 zugewandten Seite der Feder 7 ein zweites Lagerelement 9 auf.

Die Feder 7 ist vorzugsweise zwischen den Lagerelementen 8, 9 gelagert bzw. vorgespannt, insbesondere gestaucht.

Die Lagerelemente 8, 9 sind vorzugsweise plattenförmigen bzw. scheibenförmig, insbesondere ringscheibenförmig, ausgebildet. Insbesondere bilden die Lagerelemente 8, 9 Druckplatten bzw. Druckscheiben.

Die Vorspannung bzw. Vorspannkraft der Feder 7 bzw. die Stauchung der Feder 7 und/oder der Abstand der Lagerelemente 8, 9 ist vorzugsweise einstellbar bzw. verstellbar, insbesondere mittels einer Einstelleinrichtung 10 der Ventilanordnung 1.

Die Einstelleinrichtung 10 weist vorzugsweise ein Spannelement 10A auf oder ist durch ein solches gebildet. Insbesondere sind/ist die Feder 7 und/oder das Lagerelement 8 gegen das Spannelement 10A gespannt.

Besonders bevorzugt wird die Einstelleinrichtung 10 durch Drehen der Einstelleinrichtung 10, insbesondere des Spannelements 10A, insbesondere um eine Symmetrieachse der Einstelleinrichtung 10 bzw. des Spannelements 10A und/oder um die Achse A der Feder 7, betätigt.

Beim Darstellungsbeispiel ist die Einstelleinrichtung 10 durch eine Mutter als Spannelement 10A und eine korrespondierende Gewindestange 10B gebildet bzw. weist diese auf. Die Gewindestange 10B verläuft vorzugsweise entlang der (Feder-) Achse A bzw. erstreckt sich in die Feder 7.

Durch Drehen der Mutter auf der Gewindestange 10B wird vorzugsweise das Lagerelement 8 - je nach Drehrichtung - auf das Lagerelements 9 zu- oder wegbewegt und/oder der Abstand der Lagerelemente 8, 9 und/oder die Stauchung bzw. Vorspannung der Feder 7 verringert bzw. erhöht.

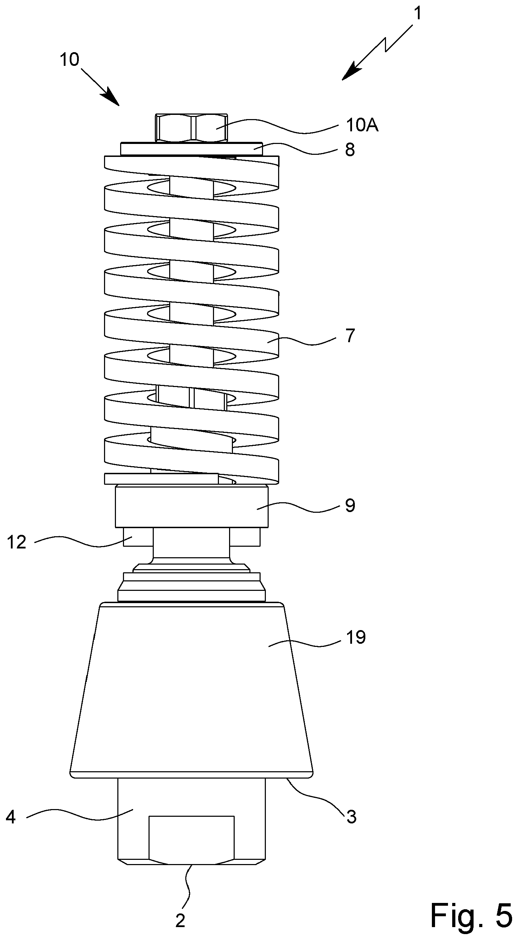

Hier sind jedoch auch andere Lösungen möglich. Beispielsweise könnte auch direkt ein (Innen-)Gewinde an dem Lagerelement 8 ausgebildet sein, so dass das Lagerelement 8 das Spannelement 10A bildet. Auch ist es möglich, dass eine Schraube als Spannelement 10A verwendet wird. Die Feder 7 und/oder das Lagerelement 8 sind/ist dann vorzugsweise gegen den Schraubenkopf gespannt. Eine solche Lösung ist beispielhaft für die zweite Ausführungsform in Fig. 5 bis 7 dargestellt.

Die Ventilanordnung 1 kann optional eine Abdeckung 11 aufweisen, um die Einstelleinrichtung 10, das Spannelement 10A und/oder das Lagerelement 8 (teilweise oder vollständig) abzudecken. Die Abdeckung 11 erstreckt sich vorzugsweise jedoch nicht über die gesamte Länge der Feder 7 bzw. bedeckt die Feder 7 vorzugsweise nicht oder nur teilweise, insbesondere nur ein oder zwei Windungen. Die Abdeckung 11 kann auch ganz weggelassen werden, wie beispielhaft für die zweite Ausführungsform in Fig. 5 bis 7 gezeigt.

Besonders bevorzugt ist die Feder 7 außerhalb des Gehäuses 4 angeordnet und/oder zumindest im Wesentlichen frei von einer Einhausung und/oder freiliegend bzw. zur Umgebung offenliegend bzw. von außen frei zugänglich angeordnet.

Die Ventilanordnung 1 weist vorzugsweise ein Zwischenelement 12 auf. Das Zwischenelement 12 ist vorzugsweise zwischen der Feder 7 bzw. dem Lagerelement 9 und dem Ventilelement 6 angeordnet bzw. gelagert.

Das Zwischenelement 12 erstreckt sich vorzugsweise radial bzw. quer, insbesondere senkrecht, zur Achse A.

Vorzugsweise ist das Zwischenelement 12 in einer Ausnehmung 4A bzw. einem Spalt, insbesondere des Hauptkörpers bzw. Gehäuses 4, gelagert bzw. angeordnet. Die Ausnehmung 4A ist insbesondere in Fig. 2 dargestellt. Der von dem Lagerelement 9 verdeckte Abschnitt der Ausnehmung 4A ist in Fig. 2 gestrichelt dargestellt.

Vorzugsweise ist das Zwischenelement 12, insbesondere in der Ausnehmung 4A und/oder formschlüssig, gegen eine Drehbewegung um die Achse A gesichert bzw. gesperrt und/oder bezüglich einer Drehung um die Achse A drehfest gelagert.

Das Zwischenelement 12 ist vorzugsweise axial beweglich gelagert. Insbesondere erstreckt sich die Ausnehmung 4A vorzugsweise in axialer Richtung, so dass sich das Zwischenelement 12 in der Ausnehmung 4A beim Öffnen bzw. Abheben des Ventilelements 6 in Öffnungsrichtung und beim Schließen bzw. Absenken des Ventilelements 6 in Schließrichtung bewegen kann, wie insbesondere in Fig. 2 dargestellt.

Die Feder 7 übt vorzugsweise eine Kraft, insbesondere Vorspannkraft, auf das Zwischenelement 12 aus, insbesondere über das Lagerelement 9. Es ist jedoch auch möglich, das Lagerelement 9 wegzulassen, so dass die Feder 7 direkt am Zwischenelement 12 anliegt bzw. gegen das Zwischenelement 12 gespannt ist.

Das Zwischenelement 12 liegt vorzugsweise direkt am Ventilelement 6 an, insbesondere axial, und/oder ist dazu ausgebildet, die Vorspannkraft der Feder 7 auf das Ventilelement 6 zu übertragen.

Besonders bevorzugt liegt das Ventilelement 6 an einem mittigen Bereich des Zwischenelements 6 an bzw. ist das Zwischenelement 12 dazu ausgebildet, die Vorspannkraft der Feder 7 auf das Ventilelement 6 zu zentrieren bzw. umzulenken.

Die Feder 7 bzw. deren Vorspannkraft wirkt vorzugsweise axial auf das Zwischenelement 12 und/oder auf einen äußeren Bereich bzw. Randbereich bzw. die äußeren Enden des Zwischenelements 12.

Die Vorspannkraft der Feder 7 wird vorzugsweise über das Zwischenelement 12 umgelenkt bzw. verläuft durch das Zwischenelement 12 hindurch in radialer Richtung von dem Randbereich bzw. den äußeren Enden des Zwischenelements 12 in einen mittigen Bereich bzw. auf die Achse A zu. Der mittige Bereich wirkt vorzugsweise in axialer Richtung auf das Ventilelement 6 bzw. lenkt die Kraft axial auf das Ventilelement 6.

Vorzugsweise bildet das Zwischenelement 12 eine Verdrehsicherung für das Ventilelement 6.

Die Ventilanordnung 1 bzw. das Zwischenelement 12 ist vorzugsweise derart ausgebildet, dass beim Einstellen bzw. Verstellen der Feder 7 bzw. ihrer Vorspannkraft, bzw. beim Betätigen, insbesondere Drehen, der Einstelleinrichtung 10 bzw. des Spannelements 10A, nur Kräfte in axialer Richtung bzw. Schließrichtung auf das Ventilelement 6 übertragen werden bzw. übertragbar sind. Vorzugsweise wirken keine Torsions- und/oder Scherkräfte auf das Ventilelement 6.

Insbesondere können beim Betätigen der Einstelleinrichtung 10 Torsionskräfte auftreten, die dazu führen, dass sich das erste Lagerelement 8, die Feder 7 und/oder das zweite Lagerelement 9 um die Verstellachse, insbesondere also die Achse A, drehen. Das Zwischenelement 12 ist jedoch gegen eine solche Drehbewegung gesichert bzw. gesperrt, insbesondere aufgrund der Lagerung in der Ausnehmung 4A. Entsprechend wird die Drehbewegung bzw. Torsionskraft nicht auf das Ventilelement 6 übertragen. Insbesondere ist das Zwischenelement 12 dazu ausgebildet, die Drehbewegung bzw. Torsionskräfte aufzunehmen bzw. abzuleiten, bzw. das Ventilelement 6 davon abzuschirmen.

Beim Darstellungsbeispiel ist das Zwischenelement 12 vorzugsweise als Passfeder ausgebildet. Hier sind jedoch auch andere Lösungen möglich. Beispielsweise kann das Zwischenelement 12 auch ein Splint, Stift, Balken o. dgl. sein. Auch ist es nicht notwendig, dass das Zwischenelement 12 länglich bzw. stiftartig ausgebildet ist. Beispielsweise könnte das Zwischenelement 12 auch ein gegen Drehung (formschlüssig) gesichertes Zylinderstück o. dgl. sein, zum Beispiel ein Zylinderstück mit mindestens einem sich radial erstreckenden Vorsprung, der in eine entsprechende Ausnehmung formschlüssig eingreift.

Die Ventilanordnung 1 wiegt vorzugsweise weniger als 1,5 kg, insbesondere weniger als 1 kg, und/oder von mehr als 0,3 kg oder 0,4 kg, besonders bevorzugt von etwa 0,6 kg.

Im Folgenden wird insbesondere mit Bezug auf die Figuren 3 und 4 die Funktionsweise der Ventilanordnung 1 bzw. der Öffnungs- und Schließmechanismus näher erläutert:
Die Ventilanordnung 1 ist vorzugsweise an ein System, eine Anlage oder eine Vorrichtung anschließbar (nicht dargestellt), insbesondere mit ihrem Einlass 2.

Fig. 3 zeigt die Ventilanordnung 1 in Schließstellung, bei der das Ventilelement 6 gegen den Ventilsitz 5 gespannt ist bzw. dichtend anliegt, insbesondere aufgrund der Feder 7 bzw. ihrer Vorspannkraft, die besonders bevorzugt mittels des Zwischenelements 12 auf das Ventilelement 6 umgelenkt bzw. zentriert ist.

In der Schließstellung ist eine Fluidverbindung zwischen dem Einlass 2 und Ablass 3 gesperrt bzw. unterbrochen. Insbesondere steht beim Betrieb eine Flüsskeit, vorzugsweise Wasser, am Einlass 2 bzw. in der Einlassleitung 2A mit einem Druck an, der vorzugsweise dem Druck entspricht, der in dem System bzw. der Anlage bzw. Vorrichtung herrscht, an das bzw. an die die Ventilanordnung 1 mittels des Einlasses 2 angeschlossen ist.

Vorzugsweise weist die Ventilanordnung 1 ein Betätigungsmittel 13 auf, um die Ventilanordnung 1, insbesondere in Abhängigkeit vom Flüssigkeitsdruck, zu betätigen bzw. zu öffnen bzw. um eine Fluidverbindung zwischen Einlass 2 und Ablass 3 herzustellen.

Beim Darstellungsbeispiel weist die Ventilanordnung 1 bzw. das Betätigungsmittel 13 einen Betätigungsraum 14 auf, der vorzugsweise im Hauptkörper bzw. Gehäuse 4 und/oder stromabwärts des Einlasses 2 und/oder stromaufwärts des Ventilsitzes 5 angeordnet bzw. gebildet ist. Die Ventilanordnung 1 ist vorzugsweise dazu ausgebildet, dass im angeschlossenen Zustand eine Flüssigkeit mit ihrem Flüssigkeitsdruck an dem Betätigungsmittel 13 bzw. in dem Betätigungsraum 14 ansteht bzw. anstehen kann.

Vorzugsweise wirkt der Flüssigkeitsdruck mit einer Kraft auf das Ventilelement 6 in axialer Richtung bzw. in Öffnungsrichtung bzw. entgegengesetzt zur Vorspannkraft bzw. Schließrichtung, bzw. ist die Ventilanordnung 1 dazu ausgebildet. Beim Darstellungsbeispiel weist das Betätigungsmittel 13 bzw. das Ventilelement 6 hierzu einen Betätigungsabschnitt 15, insbesondere eine Stufe bzw. eine sich in radiale Richtung erstreckende (Ring-)Fläche, auf. Hier sind jedoch auch andere Lösungen möglich, insbesondere wie für die weiteren Ausführungsformen später erläutert wird.

Die Ventilanordnung 1 ist vorzugsweise so eingestellt bzw. einstellbar, insbesondere mittels der Einstelleinrichtung 10, dass sie bei (normalem) Betriebsdruck in der Schließstellung verharrt. Insbesondere ist in der Schließstellung die Vorspannkraft der Feder 7, die in Schließrichtung auf das Ventilelement 6 wirkt, größer als die Druckkraft der Flüssigkeit, die in Öffnungsrichtung auf das Ventilelement 6 bzw. dessen Betätigungsabschnitt 15 wirkt. Die resultierende Kraft wirkt folglich in Schließrichtung.

Unter "Betriebsdruck" ist vorzugsweise der (Flüssigkeits-)Druck zu verstehen, bei dem das System bzw. die Anlage bzw. Vorrichtung, an das/die die Ventilanordnung 1 bzw. deren Einlass 2 angeschlossen ist, betrieben wird bzw. betreibbar ist, und/oder der (Flüssigkeits-)Druck, für den das System bzw. die Anlage bzw. Vorrichtung ausgelegt ist. Der Betriebsdruck ist also vorzugsweise der normalerweise herrschende Druck des Systems bzw. der Anlage bzw. Vorrichtung (im Betrieb). Hierbei ist unter "Betriebsdruck" vorzugsweise nicht ein bestimmter Druck zu verstehen, sondern ein Druckbereich, beispielsweise 50 bis 200 bar oder 50 bis 500 bar.

Wenn der Flüssigkeitsdruck ansteigt und seine Druckkraft im Betätigungsraum 14 bzw. auf das Ventilelement 6 bzw. den Betätigungsabschnitt 15 die durch die Feder 7 ausgeübte Vorspannkraft erreicht bzw. übersteigt, ändert sich vorzugsweise die Richtung der resultierenden Kraft und wirkt dann in Öffnungsrichtung. Der hierfür nötige Druck wird auch als Ansprechdruck bezeichnet.

Der Ansprechdruck liegt vorzugsweise oberhalb des Betriebdruck(bereich) bzw. des maximalen Drucks, für den das System bzw. die Anlage bzw. Vorrichtung, an das/die die Ventilanordnung 1 bzw. deren Einlass 2 angeschlossen ist, ausgelegt ist. Der Ansprechdruck liegt jedoch vorzugsweise unterhalb einer maximal zulässigen Drucküberschreitung des Systems bzw. der Anlage bzw. Vorrichtung.

Vorzugsweise liegt der Ansprechdruck höchstens 5 %, 10 % oder 15 % über dem maximal zulässigen Betriebsdruck.

Bei Erreichen bzw. Überschreiten des Ansprechdrucks wird das Ventilelement 6 vorzugsweise vom Ventilsitz 5 abgehoben bzw. in Öffnungsrichtung, insbesondere entgegen der Vorspannkraft der Feder 7, bewegt. Dies führt vorzugsweise zu einer Axialbewegung des Zwischenelements 12 und/oder Lagerelements 9 in Öffnungsrichtung bzw. zu einer (weiteren) Stauchung der Feder 7.

Der Hub des Ventilelements 6 bzw. wie weit das Ventilelement 6 vom Ventilsitz 5 abgehoben wird, hängt vorzugsweise vom Flüssigkeitsdruck ab. Insbesondere nimmt der Hub (stetig) mit steigendem Druck zu, bis ein Maximalhub erreicht ist. Der für den Maximalhub nötige Druck wird auch als Öffnungsdruck bezeichnet. Bei Erreichen des Öffnungsdrucks ist die Ventilanordnung 1 vorzugsweise vollständig geöffnet. Dies ist beispielhaft in Fig. 4 dargestellt.

Zwischen dem Ansprechdruck und dem Öffnungsdruck ist der Zusammenhang zwischen Druck und Hub vorzugsweise zumindest im Wesentlichen linear.

Vorzugsweise liegt der Öffnungsdruck unterhalb der maximal zulässigen Drucküberschreitung des Systems bzw. der Anlage bzw. Vorrichtung.

Vorzugsweise liegt der Öffnungsdruck höchstens 5 %, 10 % oder 15 % über dem Ansprechdruck. Es ist auch möglich, dass das Ventilelement 6 bei Erreichen des Ansprechdrucks direkt mit vollem Hub öffnet, der Öffnungsdruck also zumindest im Wesentlichen dem Ansprechdruck entspricht.

Wenn das Ventilelement 6 vom Ventilsitz 5 abgehoben ist, kann Flüssigkeit vom Einlass 2 zum Ablass 3 strömen. Der Volumenstrom bzw. die Durchflussrate bzw. Durchflussmenge vom Einlass 2 zum Ablass 3 hängt vorzugsweise vom Hub des Ventilelements 6 ab, wobei der Volumenstrom umso größer ist, je mehr das Ventilelement 6 abgehoben ist.

Die Ventilanordnung 1 bzw. die Ablassleitung 3A weist vorzugsweise eine Düse bzw. Querschnittsverengung 16 hinter bzw. stromabwärts des Ventilsitzes 5 auf.

Die Querschnittsverengung 16 kann direkt im Hauptkörper bzw. Gehäuse 4 bzw. der Ablassleitung 3A gebildet sein, oder durch einen Einsatz in der Ablassleitung 3A, vorzugsweise durch den gleichen Einsatz 5A, der auch den Ventilsitz 5 bildet.

Unter einer Querschnittsverengung 16 ist hierbei vorzugsweise zu verstehen, dass der wirksame bzw. hydraulische Querschnitt, durch den Flüssigkeit strömen kann, im Bereich der Querschnittsverengung 16 geringer ist als am Ventilsitz 5. Der Ventilsitz 5 begrenzt vorzugsweise eine Öffnung, durch die Flüssigkeit bei abgehobenem Ventilelement 6 zum Ablass 3 strömen kann, wobei der Öffnungsquerschnitt vorzugsweise größer als der Querschnitt der stromabwärts angeordnete Querschnittsverengung 16 ist.

Vorzugsweise ist der hydraulische Durchmesser der Ventilsitzöffnung größer als der hydraulische Durchmesser der Querschnittsverengung 16.

Beim Darstellungsbeispiel gemäß Fig. 3 und 4 sind der Öffnungsquerschnitt der vom Ventilsitz 5 begrenzten Öffnung und der Querschnitt der Querschnittsverengung 16 vorzugsweise kreisförmig, wobei der Durchmesser bei der Querschnittsverengung 16 geringer ist. Hier sind jedoch auch andere Lösungen möglich, wie noch später mit Bezug auf die weiteren Ausführungsformen erläutert wird.

Vorzugsweise wird durch die Querschnittsverengung 16 stromauf der Querschnittsverengung eine Druckerhöhung bzw. ein zusätzlicher Druck bzw. ein Staudruck erzeugt, insbesondere im Vergleich zu einer Ventilanordnung ohne eine Querschnittsverengung 16.

Durch die Querschnittsverengung 16 bzw. den damit einhergehenden Staudruck wird vorzugsweise der Hub des Ventilelements 6 unterstützt bzw. erleichert.

Durch die Querschnittsverengung 16 wirkt vorzugsweise eine (zusätzliche) Drucckraft auf das Ventilelement 6 in Öffnungsrichtung und/oder auf die (axiale) Stirnfläche 6A des Ventilelements 6, insbesondere zumindest im Wesentlichen vollflächig.

Durch die Querschnittsverengung 16 wird vorzugsweise ein größerer Hub des Ventilelements 6 bzw. ein schnelleres bzw. weiteres Öffnen der Ventilanordnung 1 erzielt, insbesondere im Vergleich zu einer Ventilanordnung ohne Querschnittsverengung 16. Die Querschnittsverengung 16 bildet vorzugsweise eine dynamische Öffnungshilfe.

Wird die Flüssigkeit über den Ablass 3 aus dem System bzw. der Anlage bzw. Vorrichtung entfernt bzw. abgeleitet, sinkt der Druck vorzugsweise (wieder). Die Ventilanordnung 1 schließt vorzugsweise (wieder), wenn die auf das Ventilelement 6 wirkende Kraft der Vorspannkraft der Feder 7 entspricht und/oder der Flüssigkeitsdruck in der Anlage bzw. Vorrichtung bzw. dem System bzw. am Einlass 2 der Ventilanordnung 1 unter einen bestimmten Druck, den sogenannten Schließdruck, fällt.

Besonders bevorzugt liegt der Schließdruck unterhalb des Ansprechdrucks, insbesondere um mehr als 2 %, 5 %, 10 % oder 15 %. Der Schließdruck kann oberhalb oder unterhalb des maximal zulässigen Betriebsdrucks liegen. Vorzugsweise liegt der Schließdruck oberhalb des maximal zulässigen Betriebsdrucks.

Ein gegenüber dem Ansprechdruck verringerter Schließdruck wird vorzugsweise durch die Querschnittsverengung 16 erreicht. Wie bereits zuvor beschrieben, bewirkt die Querschnittsverengung 16 einen zusätzlichen Druck auf das Ventilelement 6. Hat der Flüssigkeitsdruck in der Anlage bzw. Vorrichtung bzw. dem System bzw. am Einlass 2 (wieder) den Ansprechdruck erreicht, so wirkt auf das Ventilelement 6 vorzugsweise nicht nur die Ansprechdruckkraft, sondern auch die durch die Querschnittsverengung 16 hervorgerufene Druckkraft. Insbesondere ist die Gesamtdruckkraft noch größer als die Vorspannungskraft, so dass die Ventilanordnung 1 geöffnet bleibt. Erst, wenn der Schließdruck erreicht bzw. unterschritten ist, hat die Druckkraft auf das Ventilelement 6 vorzugsweise so weit abgenommen, dass die Schließstellung (wieder) eingenommen wird.

Wie zuvor erläutert, muss zum Öffnen der Ventilanordnung 1 bzw. Abheben des Ventilelements 6 vorzugsweise die Vorspannkraft der Feder 7 überwunden werden. Es besteht ein, vorzugsweise linearer, Zusammenhang zwischen Vorspannkraft und Ansprechdruck. Über die Einstelleinrichtung 10 kann vorzugsweise der Ansprechdruck eingestellt bzw. verstellt werden. Insbesondere ist der Ansprechdruck eine Eigenschaft der Ventilanordnung 1, nämlich der zum Öffnen notwendige Druck.

Der Öffnungsdruck und/oder Schließdruck sind vorzugsweise vom Ansprechdruck abhängig und insbesondere durch die Ausbildung bzw. Geometrie der Ventilanordnung 1, beispielsweise dem Durchmesser der Querschnittsverengung 16, bestimmt.

Die Ventilanordnung 1 ist vorzugsweise für einen Flüssigkeitsdruck bzw. Betriebsdruck von mindestens 50 bar, insbesondere 100 bar oder 200 bar und/oder höchstens 300 bar, 500 bar oder 700 bar ausgelegt.

Vorzugsweise beträgt der einstellbare Ansprechdruck mindestens 10, 20 oder 50 bar, insbesondere 100 bar oder 200 bar und/oder höchstens 300 bar, 500 bar oder 700 bar.

Bei der Ventilanordnung 1 gemäß erster Ausführungsform handelt es sich vorzugsweise um eine Sicherheitsventilanordnung. Es sind jedoch auch andere Anwendungen denkbar, bei denen eine Fluidverbindung druckgesteuert gesperrt oder freigegeben werden soll.

Nachfolgend werden weitere Ausführungsformen der vorschlagsgemäßen Ventilanordnung 1 anhand der weiteren Figuren erläutert, wobei primär lediglich auf wesentliche Unterschiede bzw. neue Aspekte eingegangen wird. Die bisherigen Ausführungen und Erläuterungen gelten insbesondere entsprechend oder ergänzend, auch ohne Wiederholung.

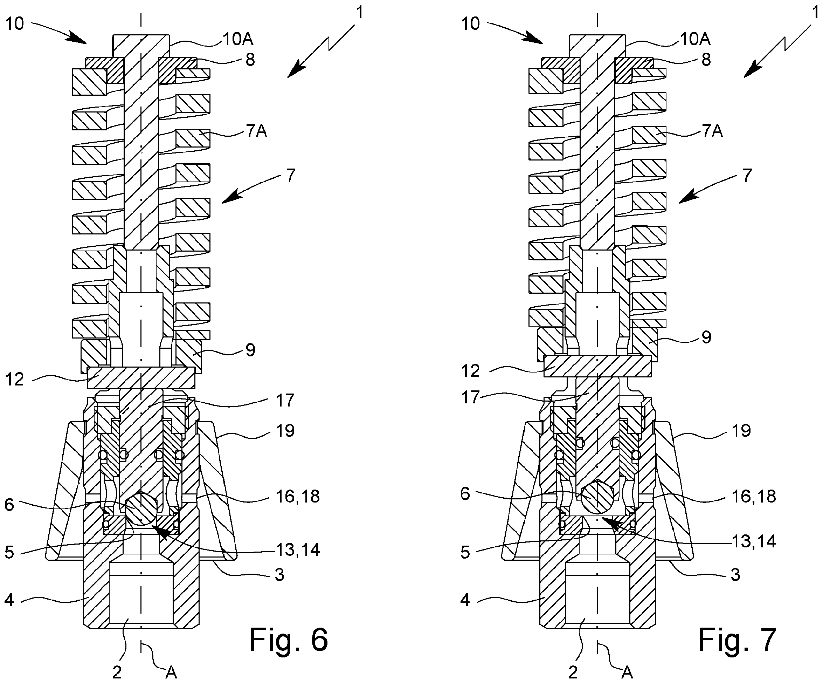

In den Figuren 5 bis 7 ist eine zweite Ausführungsform der vorschlagsgemäßen Ventilanordnung 1 dargestellt, die insbesondere als Sicherheitsventilanordnung eingesetzt werden kann. Hierbei zeigt Fig. 5 die Ventilanordnung 1 gemäß zweiter Ausführungsform in einer schematischen Seitenansicht und Fig. 6 und 7 jeweils in einem schmatischen Schnitt in Schließstellung bzw. Offenstellung.

Die zweite Ausführungsform unterscheidet sich von der ersten Ausführungsform insbesondere durch die Gestaltung bzw. Anordnung des Einlass 2, Ablass 3, Hauptkörper bzw. Gehäuse 4, Ventilsitz 5 und/oder Ventilelement 6. Insbesondere gelten vorzugsweise die gleichen Ausführungen und Erläuterungen bezüglich der Feder 7, Einstelleinrichtung 10 und/oder dem Zwischenelement 12 wie für die erste Ausführungsform.

Beim Darstellungsbeispiel ist das Spannelement 10A der Einstelleinrichtung 10 vorzugsweise als Schraube ausgebildet. Hier sind jedoch auch andere Lösungen möglich, insbesondere wie für die erste Ausführungsform beschrieben. Ferner ist es auch möglich, die Ventilanordnung 1 gemäß zweiter Ausführungsform mit der optionalen Abdeckung 11 zu versehen, die beim Darstellungsbeispiel weggelassen wurde.

Beim Darstellungsbeispiel ist das Ventilelement 6 vorzugsweise als Ventilkugel ausgebildet.

Die Ventilanordnung 1 gemäß zweiter Ausführungsform weist vorzugsweise eine zwischen dem Zwischenelement 12 und dem, insbesondere als Ventilkugel ausgebildeten, Ventilelement 6 eine Kolbenstange 17 auf.

Vorzugsweise ist die durch die Feder 7 ausgeübte Vorspannkraft vom Zwischenelement 12 über die Kolbenstange 17 auf das insbesondere als Ventilkugel ausgebildete Ventilelement 6 übertragbar. Besonders bevorzugt ist das insbesondere als Ventilkugel ausgebildete Ventilelement 6 durch die Kolbenstange 17 gegen den Ventilsitz 5 spannbar bzw. gespannt.

Hier sind jedoch auch andere Lösungen möglich. Beispielsweise könnte das Ventilelement 6 selbst kolbenförmig sein und/oder direkt am Zwischenelement 12 anliegen, wie in der ersten Ausführungsform, und/oder die Kolbenstange 17 einstückig mit dem Ventilelement 6 gebildet sein, z. B. ein halbkugelförmiges, axiales Ende haben.

Der Hauptkörper bzw. das Gehäuse 4 ist vorzugsweise zumindest im Wesentlichen zylindrisch ausgebildet.

Die Öffnungsrichtung des Einlasses 2 bzw. die Einlassleitung 2A verläuft vorzugsweise in axialer Richtung.

Das Betätigungsmittel 13 ist bei der zweiten Ausführungsform vorzugsweise durch die dem Einlass 2 zugewandte Oberfläche des Ventilelements 6 und/oder den Betätigungsraum 14 unmittelbar vor dem Ventilelement 6 gebildet.

Vorzugsweise öffnet die Ventilanordnung 1 bzw. erfolgt ein Hub des Ventilelements 6, insbesondere gemeinsam mit der Kolbenstange 17, wenn die Druckkraft auf das Betätigungsmittel 13 bzw. auf die dem Einlass 2 zugewandte Oberfläche des Ventilelements 6 die durch die Feder 7 auf das Ventilelement 6 ausgeübte Vorspannkraft erreicht bzw. überschreitet. Dies erfolgt insbesondere bei dem (eingestellten) Ansprechdruck, wie für die erste Ausführungsform beschrieben.

Vorzugsweise weist die Ventilanordnung 1, insbesondere der Hauptkörper bzw. das Gehäuse 4, einen oder mehrere Querkanäle 18 stromabwärts des Ventilsitzes 5 auf. Die Querkanäle 18 verlaufen vorzugsweise radial bzw. quer, insbesondere orthogonal, zu der Achse A bzw. der Einlassleitung 2A bzw. der Öffnungs-/Schließrichtung des Ventilelements 6.

Besonders bevorzugt sind mehrere, über den Umfang der Ventilanordnung 1 bzw. des Hauptkörpers bzw. Gehäuses 4 verteilte Querkanäle 18 vorgesehen, beispielsweise 2, 4, 6 oder 8 Querkanäle 18.

Die Querkanäle 18 münden vorzugsweise an der Außenseite des Hauptkörpers bzw. Gehäuses 4 bzw. in die Umgebung. Die Querkanäle 18 können (gemeinsam) den Ablass 3 bilden.

Bevorzugt weist die Ventilanordnung 1 ein Ablenkteil 19 auf. Vorzugsweise ist das Ablenkteil 19 konisch bzw. kegelstumpfförmig bzw. hat die Form der Mantelfläche eines Kegelstumpfs.

Vorzugsweise umgibt bzw. umschließt das Ablenkteil 19 den Hauptkörper bzw. das Gehäuse 4 (radial), zumindest teilweise, insbesondere im Bereich der Querkanäle 18. Die Symmetrieachse des Ablenkteils 19 entspricht vorzugsweise der Achse A. Insbesondere nimmt der Öffnungsdurchmesser des Ablenkteils 19 in Richtung des Einlasses 2 bzw. in Schließrichtung des Ventilelements 6 zu.

Vorzugsweise ist das Ablenkteil 19 am Gehäuse 4 befestigt.

Über das Ablenkteil 19 ist aus den Querkanälen 18 austretende Flüssigkeit, insbesondere Wasser, umlenkbar bzw. ablenkbar. Vorzugsweise kann (radial) austretende Flüssigkeit, insbesondere durch die konische Form, in eine andere Richtung, insbesondere in axiale Richtung, abgelenkt werden, vorzugsweise durch Abprallen der Flüssigkeit an dem Ablenkteil 19 bzw. dessen Innenwandung.

An seinem axialen, aufgeweiteten Ende ist das Ablenkteil 19 vorzugsweise offen, so dass die Flüssigkeit dort in die Umgebung austreten kann. Insbesondere wird so der Ablass 3 gebildet.

Bei der zweiten Ausführungsform hat der Ablass 3 vorzugsweise eine ringförmige Öffnung und/oder umgibt den Hauptkörper bzw. das Gehäuse 4 und/oder ist (radial) von dem Hauptkörper bzw. Gehäuse 4 und dem Ablenkteil 19 begrenzt.

Die Strömungsrichtung von aus dem Ablass 3 austretender Flüssigkeit ist vorzugsweise entgegengesetzt zu der Strömungsrichtung von durch den Einlass 2 eintretender Flüssigkeit.

Vorzugsweise ist bei der zweiten Ausführungsform kein Ableiten von Flüssigkeit über eine Leitung bzw. einen Schlauch vorgesehen, bzw. weist der Ablass 3 keinen Anschluss für eine Leitung oder einen Schlauch auf. Vorzugsweise wird die Flüssigkeit direkt in die Umgebung abgelassen bzw. abgeleitet, insbesondere über die Querkanäle 18 und/oder das Ablenkteil 19. Hierdurch kann vorzugsweise sichergestellt werden, dass im Fall eines Öffnens der Ventilanordnung 1 Flüssigkeit abgeleitet wird und der Flüssigkeitsdruck entsprechend verringert wird, insbesondere da kein Schlauch oder dergleichen zum Ableiten verwendet werden kann, der seinerseits blockiert sein könnte.

Die Querschnittsverengung 16 wird vorzugsweise durch die Querkanäle 18 gebildet. Hierdurch können entsprechende Wirkungen und Vorteile, wie für die erste Ausführungsform beschrieben, erzielt werden.

Unter der Querschnittsverengung 16 ist bei der zweiten Ausführungsform vorzugsweise die Summe der Querschnitte der einzelnen Querkanäle 18 zu verstehen, insbesondere der hydraulische Querschnitt der Querkanäle 18 bzw. der (Gesamt-)Strömungsquerschnitt einer Flüssigkeit, die durch die Querkanäle 18 strömt. Mit anderen Worten ist der (hydraulische) Querschnitt der Öffnung des Ventilsitzes 5 größer als der (hydraulische) Querschnitt der Querkanäle 18 bzw. der Summe aller einzelnen Querschnitte der Querkanäle 18. Insbesondere ist der hydraulische Durchmesser der Ventilsitzöffnung größer als der hydraulische Durchmesser der durch die Querkanäle 18 gebildet ist.

Vorzugsweise kommt es zu einer Druckänderung der Flüssigkeit, wenn diese den geöffneten Ventilsitz 5 und anschließend die Querkanäle 18 durchströmt, insbesondere zu einem Staudruck stromauf der Querkanäle 18, vorzugsweise aufgrund der von den Querkanälen 18 gebildeten (hydraulischen) Querschnittsverengung 16. Dies führt vorzugsweise zu den gleichen oder korrespondierenden Wirkungen und Vorteilen wie für die erste Ausführungsform beschrieben, insbesondere einem schnelleren Öffnen und/oder größeren Hub und/oder unterhalb des Ansprechsdrucks liegenden Schließdrucks.

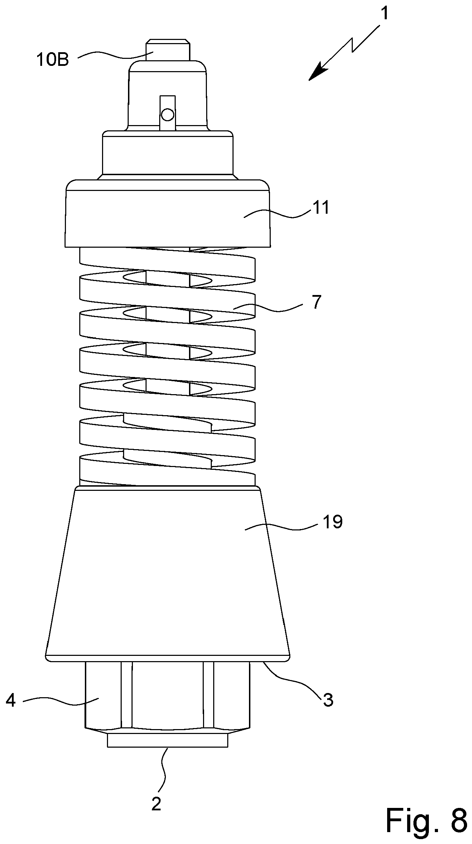

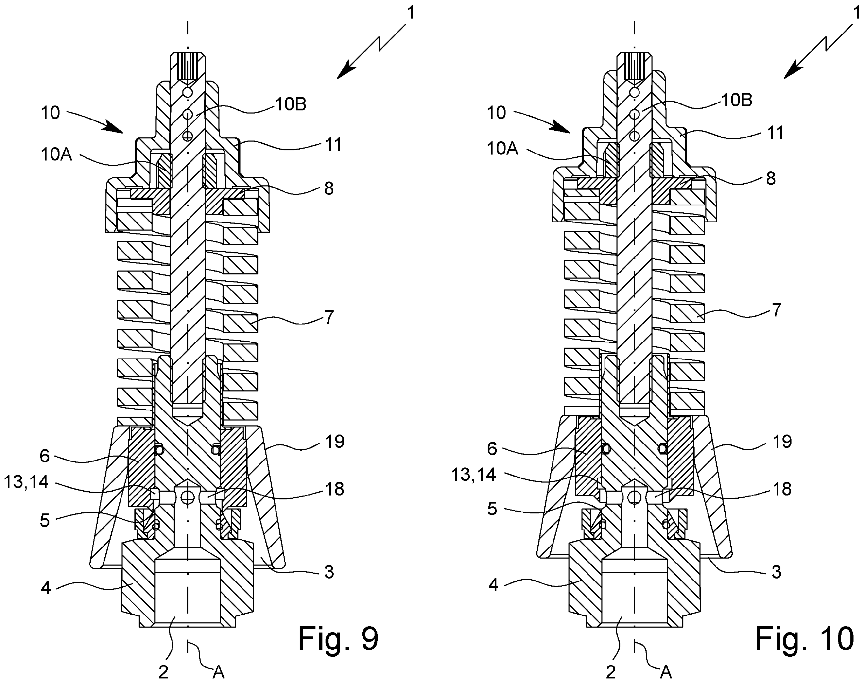

In den Figuren 8 bis 10 ist eine dritte Ausführungsform der vorschlagsgemäßen Ventilanordnung 1 dargestellt, die insbesondere als Sicherheitsventilanordnung eingesetzt werden kann. Hierbei zeigt Fig. 8 die Ventilanordnung 1 gemäß dritter Ausführungsform in einer schematischen Seitenansicht und Fig. 9 und 10 jeweils in einem schmatischen Schnitt in Schließstellung bzw. Offenstellung.

Vorzugsweise ist die Ventilanordnung 1 gemäß der dritten Ausführungsform ähnlich ausgebildet wie die Ventilanordnung 1 gemäß der zweiten Ausführungsform, insbesondere mit Querkanälen 18 und einem optionalen Ablenkteil 19. Die Ventilanordnung 1 gemäß der dritten Ausführungsform unterscheidet sich von der Ventilanordnung 1 gemäß der zweiten Ausführungsform im Wesentlichen durch die Ausbildung des Ventilelements 6.

Beim Darstellungsbeispiel ist das Ventilelement 6 hülsenförmig bzw. zumindest im Wesentlichen hohlzylindrisch und/oder umgibt bzw. umschließt den/das insbesondere zumindest im Wesentlichen zylindrische(n) Hauptkörper bzw. Gehäuse 4.

Die Symmetrieachse des Ventilelements 6 entspricht vorzugsweise der Achse A und/oder Hauptkörper bzw. Gehäuse 4 und Ventilelement 6 sind vorzugsweise konzentrisch zueinander angeordnet.

Vorzugsweise ist an oder (unmittelbar) stromabwärts der Mündungen der Querkanäle 18 der Ventilsitz 5 gebildet, der besonders bevorzugt ringförmig ausgebildet und/oder in Schließstellung von dem insbesondere hülsenförmigen Ventilelement 6 verschlossen ist.

Der Ventilsitz 5 ist beim Darstellungsbeispiel vorzugsweise durch einen Dichtring o. dgl. gebildet, der den Hauptkörper bzw. das Gehäuse 4 (radial) umgibt bzw. umschließt. Es ist jedoch auch möglich, den Ventilsitz 5 direkt durch den Hauptkörper bzw. das Gehäuse 4 zu bilden.

Bei Erreichen oder Überschreiten des Ansprechdrucks ist das Ventilelement 6 vorzugsweise entgegen der Vorspannkraft der Feder 7 bewegbar bzw. vom Ventilsitz 5 abhebbar. Insbesondere weist das Ventilelement 6 hierfür eine (ringförmige) Betätigungsfläche auf und/oder ist zwischen den Mündungsöffnungen der Querkanäle 18 und dem Ventilsitz 5 ein (ringförmiger) Betätigungsraum 14 gebildet.

Durch das Abheben des Ventilelements 6 vom Ventilsitz 5 wird vorzugsweise ein ringfömiger Spalt freigegeben, durch den die Flüssigkeit in die Umgebung abgegeben werden kann, insbesondere über das Ablenkteil 19.

Der ringförmige Spalt am Ventilsitz 5 kann die Querschnittsverengung 16 bilden. Insbesondere ist der (hydraulische) Querschnitt bzw. hydraulische Durchmesser des Spalts (unmittelbar) stromab des Ventilsitzes 5 geringer als der (hydraulische) Querschnitt bzw. hydraulische Durchmesser der (Summe der) Querkanäle 18 stromauf des Ventilsitzes 5. Hierdurch werden entsprechende Wirkungen und Vorteile erzielt.

Das Ablenkteil 19 ist vorzugsweise an dem Ventilelement 6 angeordnet bzw. befestigt. Insbesondere ist das Ablenkteil 19 mit dem Ventilelement 6 zusammen bewegbar.

Beim Darstellungsbeispiel gemäß dritter Ausführungsform weist die Ventilanordnung 1 vorzugsweise kein Zwischenelement 12 auf.

Vorzugsweise weist jedoch auch die Ventilanordnung 1 gemäß dritter Ausführungsform eine Verdrehsicherung (nicht dargestellt) auf, die insbesondere eine Axialbewegung des Ventilelements 6 gestattet, aber eine Drehbewegung um die Achse A verhindert bzw. sperrt. Beispielsweise kann das Ventilelement 6 radial nach innen weisende Vorsprünge aufweisen, die in entsprechenden Nuten des Hauptkörpers bzw. Gehäuses 4 axial geführt sind, oder umgekehrt. Eine derartige Verdrehsicherung ist auch bei den übrigen Ausführungsformen denkbar.

Es sind jedoch auch andere Lösungen möglich. Insbesondere kann auch die Ventilanordnung 1 gemäß dritter Ausführungsform ein Zwischenelement 12 wie für die übrigen Ausführungsformen beschrieben und dargestellt aufweisen.

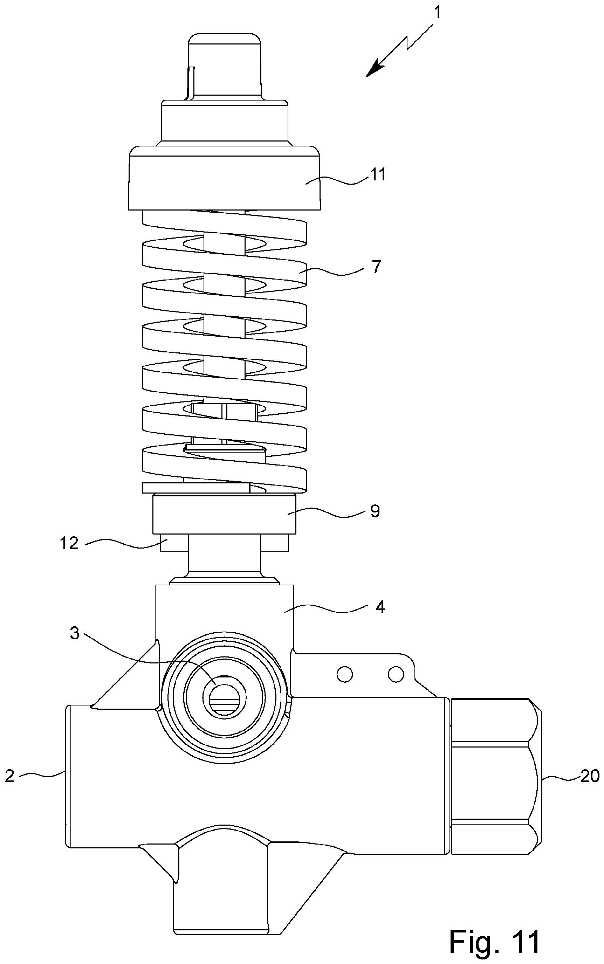

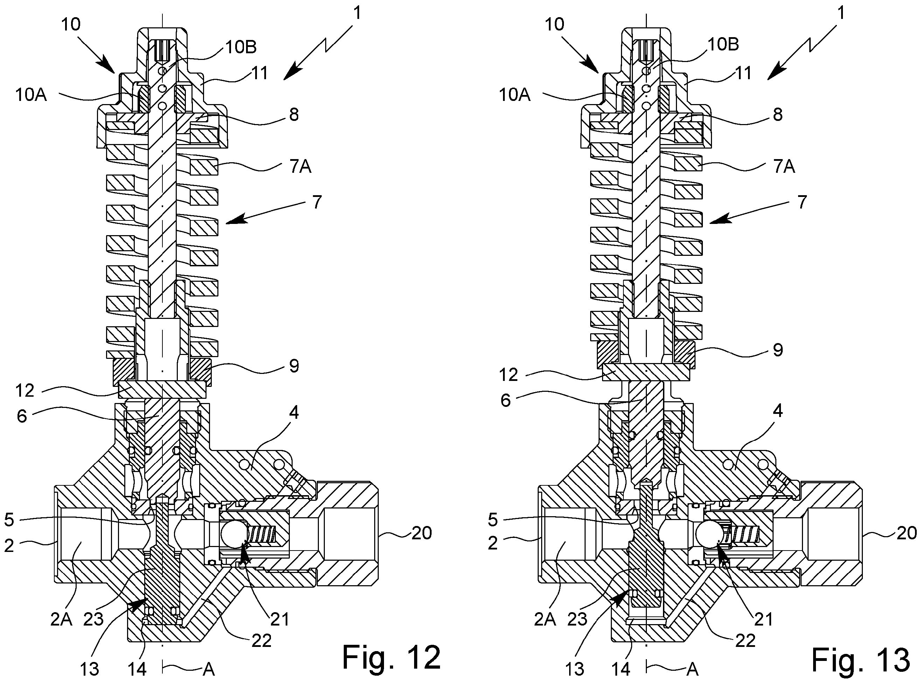

In den Figuren 11 bis 13 ist eine vierte Ausführungsform der vorschlagsgemäßen Ventilanordnung 1 dargestellt, die insbesondere als Umlaufventilanordnung eingesetzt werden kann. Hierbei zeigt Fig. 11 die Ventilanordnung 1 gemäß vierter Ausführungsform in einer schematischen Seitenansicht und Fig. 12 und 13 jeweils in einem schmatischen Schnitt in Schließstellung bzw. Offenstellung.

Auch bezüglich der vierten Ausführungsform gelten vorzugsweise die gleichen Ausführungen und Erläuterungen bezüglich Feder 7, Einstelleinrichtung 10 und Zwischenelement 12 wie für die vorherigen Ausführungsformen.

Insbesondere wirkt die Vorspannkraft der Feder 7 auch bei der vierten Ausführungsform in die gleiche Richtung wie bei den vorherigen Ausführungsformen, insbesondere also axial in Richtung des Zwischenelements 12 bzw. Ventilsitzes 5 bzw. Ventilelements 6 bzw. Hauptkörpers/Gehäuses 4. Die Feder 7 ist vorzugsweise eine Druckfeder.

Vorzugsweise ist die Feder 7 gemäß der vierten Ausführungsform, insbesondere wie auch bei den übrigen Ausführungsformen, an ihrer dem Hauptkörper/Gehäuse 4 bzw. Ventilsitz 5 bzw. Ventilelement 6 bzw. Zwischenelement 12 abgewandten Seite bzw. der Seite, an der die Einstelleinrichtung 10 vorgesehen ist, im Betrieb unbeweglich bzw. nur zum Einstellen der Vorspannungskraft der Feder 7 bewegbar gelagert und im Übrigen axial festgelegt.

Vorzugsweise ist die dem Hauptkörper/Gehäuse 4 bzw. Ventilsitz 5 bzw. Ventilelement 6 bzw. Zwischenelement 12 zugewandte Seite der Feder 7 bzw. die Seite, die der Einstelleinrichtung 10 abgewandt ist, ist beweglich gelagert, insbesondere so dass die Feder 7 bei Abheben des Ventilelements 6 vom Ventilsitz 5 gestaucht wird, bzw. derart (unmittelbar) mit dem Ventilelement 6 gekoppelt, dass eine Axialbewegung bzw. ein Abheben des Ventilelements 6 zu einer entsprechenden axialen Bewegung des Endes der Feder 7 an dieser Seite führt.

Bei den aus dem Stand der Technik bekannten Umlaufventilanordnungen ist es hingegen üblich, dass die eingesetzte Feder, insbesondere ebenfalls eine Druckfeder, in genau die entgegengesetzte Richtung wirkt und das Ventilelement gegen den Ventilsitz zieht. Beim Stand der Technik ist es insbesondere so, dass die dem Hauptkörper bzw. Gehäuse bzw. Ventilsitz zugewandte Seite der Feder fest gelagert ist. Entsprechend ist die abgewandte Seite, insbesondere die Seite mit der Einstelleinrichtung, auch im Betrieb beweglich gelagert, insbesondere so dass ein Abheben des Ventilelements vom Ventilsitz zu einer Axialbewegung dieses Endes, insbesondere gemeinsam mit der Einstelleinrichtung, bzw. einer Stauchung der Feder führt. Diese Ausbildung hat insbesondere zur Folge, dass sich das Ventilelement bzw. eine davon gebildete Kolbenstange beim Stand der Technik durch die gesamte Feder erstrecken muss, damit diese eine entsprechende Vorspannkraft auf das Ventilelement ausüben kann.

Bei der vierten Ausführungsform ist das Ventilelement 6 vorzugsweise als Kolben ausgebildet bzw. weist einen Kolben auf, insbesondere wie bei der ersten Ausführungsform. Hier sind jedoch auch andere Lösungen möglich, beispielsweise mit Ventilkugel wie bei der zweiten Ausführungsform. Das Ventilelement 6 erstreckt sich jedoch vorzugsweise nur bis zum Zwischenelement 12. Insbesondere weist die Ventilanordnung 1 bzw. das Ventilelement 6 keine Kolbenstange auf, die sich - zumindest teilweise - durch die Feder 7 erstreckt, wie dies im Stand der Technik üblich ist.

Die Ventilanordnung 1 gemäß der vierten Ausführungsform hat vorzugsweise einen von Einlass 2 und Ablass 3 verschiedenen Auslass 20.

Vorzugsweise sind der Einlass 2, der Ablass 3 und/oder der Auslass 20 als Anschlüsse ausgebildet, an die Schläuche bzw. Leitungen anschließbar sind. Vorzugsweise weisen der Einlass 2, Ablass 3 und/oder Auslass 20 entsprechende Anschlusseinrichtungen, wie Gewinde, Schnellkupplungen oder dergleichen, auf.

Vorzugsweise sind der Einlass 2 und Auslass 20 bzw. deren Öffnungen oder Anschlüsse einander gegenüberliegend angeordnet und/oder kann eine Flüssigkeit die Ventilanordnung 1 zumindest im Wesentlichen geradlinig vom Einlass 2 zum Auslass 20 durchströmen.

Der Ablass 3 bzw. dessen Öffnung oder Anschluss ist vorzugsweise quer, insbesondere orthogonal, zum Einlass 2 und/oder Auslass 20 angeordnet.

Vorzugsweise sind/ist beim Darstellungsbeispiel der Einlass 2, Ablass 3 und/oder Auslass 20 quer, insbesondere orthogonal, zu der Öffnungs- bzw. Schließrichtung des Ventilelements 6 und/oder der Achse A angeordnet. Besonders bevorzugt sind die Einlassrichtung bzw. Auslassrichtung, die Ablassrichtung und die Öffnungs-/Schließrichtung bzw. Achse A jeweils quer, insbesondere orthogonal, zueinander. Hier sind jedoch auch andere Anordnungen möglich, insbesondere durch entsprechende Gestaltung des Hauptkörpers bzw. Gehäuses 4.

Zwischen dem Einlass 2 und Auslass 20 ist vorzugsweise ein Rückschlagventil 21 angeordnet.

Die Ventilanordnung 1 ist vorzugsweise derart ausgelegt, bzw. der Ansprechdruck ist derart eingestellt, dass im Normalbetrieb das Rückschlagventil 21 geöffnet und das durch Ventilsitz 5 und Ventilelement 6 gebildete Ventil geschlossen ist. Diese Stellung ist vorzugsweise die Schließstellung der Ventilanordnung 1. Die Begriffe "Schließstellung" und "Öffnungsstellung" beziehen sich also vorzugsweise auf den Ventilsitz 5 bzw. das Ventilelement 6, insbesondere wie auch bei den anderen Ausführungsformen. Insbesondere kann sich die Ventilanordnung 1 in der Schließstellung/Öffnungsstellung befinden, wenn das Rückschlagventil 21 geöffnet/geschlossen ist.

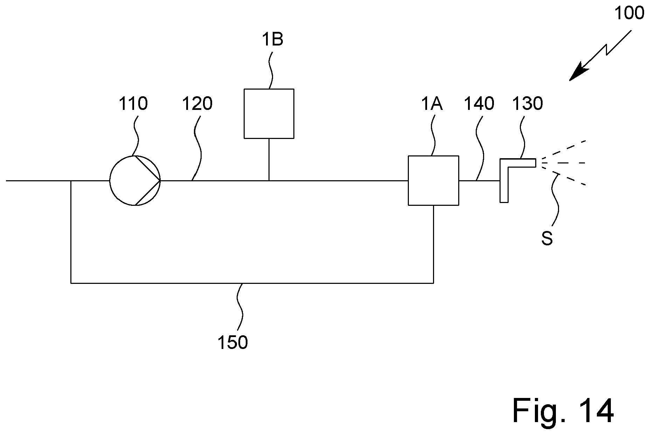

Unter "Normalbetrieb" ist vorzugsweise ein Betrieb der Ventilanordnung 1 bzw. der Anlage, des Systems bzw. der Vorrichtung, woran die Ventilanordnung 1 angeschlossen ist, zu verstehen, bei dem eine Flüssigkeit stromabwärts des Auslasses 20 abgegeben wird. Hierauf wird später noch genauer mit Bezug auf Fig. 14 eingegangen, die beispielhaft die Verwendung der vorschlagsgemäßen Ventilanordnung 1 bei einer Hochdruckreinigungsvorrichtung zeigt. Der "Normalbetrieb" wird auch als "Förderbetrieb" bezeichnet.

Beim Normalbetrieb bzw. in der Schließstellung sind vorzugsweise der Einlass 2 und der Auslass 20 fluidisch verbunden und/oder der Einlass 2 und der Ablass 3 fluidisch getrennt.

Der Ablass 3 und der Auslass 20 sind vorzugsweise nicht fludidisch verbindbar bzw. sind (dauerhaft) voneinander abgedichtet, insbesondere sowohl in der Schließstellung als auch in der Offenstellung der Ventilanordnung 1.

Vorzugsweise ist stromabwärts des Rückschlagventils 21 bzw. zwischen Rückschlagventil 21 und Auslass 20 ein Steuerkanal 22 vorgesehen, der den Auslass 20 mit dem Betätigungsraum 14 fluidisch verbindet.

Wie insbesondere in Fig. 12 dargestellt, ist der Betätigungsraum 14 vorzugsweise ringförmig und/oder konzentrisch zu der Achse A angeordnet bzw. gebildet.

Vorzugsweise weist die Ventilanordnung 1 einen Kolben 23 auf. Der Kolben 23 begrenzt den Betätigungsraum 14 vorzugsweise axial und/oder ist symmetrisch zur Achse A bzw. der Öffnungs- bzw. Schließrichtung des Ventilelements 6 angeordnet. Insbesondere entspricht die Symmetrieachse des Kolbens 23 der Achse A.

Vorzugsweise ist der Kolben 23 zwischen dem Betätigungsraum 14 und dem Ventilelement 6 angeordnet und/oder liegt stromauf des Ventilssitzes 5 bzw. einlassseitig am Ventilelement 6 an und/oder ist mit diesem verbunden.

Vorzugsweise wirkt die Vorspannkraft der Feder 7, insbesondere über das Ventilelement 6, auf den Kolben 23 bzw. spannt diesen gegen den Hauptkörper bzw. das Gehäuse 4, wie in Fig. 12 dargestellt. Vorzugsweise weist der Kolben 23 eine Stufe o. dgl. auf, so dass der Betätigungsraum 14 zwischen Hauptkörper/Gehäuse 4 und der Stufe des Kolben 23 gebildet ist.

Der Kolben 23 ist vorzugsweise quer, insbesondere orthogonal, zur Einlassrichtung bzw. Einlassleitung 2A angeordnet.

Der Kolben 23 ragt vorzugsweise durch die Einlassleitung 2A hindurch bzw. ist in der Einlassleitung 2A von Flüssigkeit umströmbar. Insbesondere kann der Kolben 23 im Bereich der Einlassleitung 2A einen verringerten Durchmesser aufweisen.

Vorzugsweise weist das Betätigungsmittel 13 den Betätigungsraum 14 und/oder den Kolben 23 auf oder ist dadurch gebildet.

Die Ventilanordnung 1 ist vorzugsweise dazu ausgebildet, die fluidische Verbindung zwischen Einlass 2 und Auslass 20 zu trennen und/oder eine fluidische Verbindung zwischen Einlass 2 und Ablass 3 herzustellen, wenn der Flüssigkeitsdruck auslassseitig bzw. am Auslass 20 und/oder im Betätigungsraum 14 den Ansprechdruck erreicht oder überschreitet.

Insbesondere, wenn ein Flüssigkeitsaustritt am oder stromabwärts des Auslasses 20 unterbrochen wird, beispielsweise weil eine angeschlossene Ventilpistole geschlossen wird, kommt es zu einer auslassseitigen Druckerhöhung bzw. Druckspitze bzw. zu einem Druckimpuls. Hierdurch wird vorzugsweise ein Schließen des Rückschalgventils 21 bzw. ein Sperren der Fluidverbindung zwischen Einlass 2 und Auslass 20 bewirkt.

Der Kolben 23 ist vorzugsweise dazu ausgebildet, das Ventilelement 6 vom Ventilsitz 5 abzuheben, wenn der Ansprechdruck erreicht bzw. überschritten wird.

Die Druckerhöhung bzw. Druckspitze bzw. der Druckimpuls am Auslass 20 bewirkt vorzugsweise eine Druckerhöhung im Betätigungsraum 14 bzw. am Kolben 23, insbesondere über den Steuerkanal 22. Hierdurch wird der Kolben 23 vorzugsweise entgegen der Vorspannkraft der Feder 7 bzw. in Öffnungsrichtung des Ventilelements 6 bewegt bzw. gedrückt, so dass das am Kolben 23 anliegende bzw. daran befestigte Ventilelement 6 vom Ventilsitz 5 abgehoben wird.

Die Offenstellung ist in Fig. 13 dargestellt. Das Rückschlagventil 21 ist vorzugsweise geschlossen und das Ventilelement 6 vom Ventilsitz 5 abgehoben, so dass eine Fluidverbindung zwischen Einlass 2 und Auslass 20 unterbrochen und eine Fluidverbindung zwischen Einlass 2 und Ablass 3 hergestellt ist.

Auch bei der Ventilanordnung 1 gemäß vierter Ausführungsform kann eine Querschnittsverengung 16 hinter dem Ventilsitz 5, wie bei den anderen Ausführungsformen, vorgesehen und vorteilhaft sein.

Der Ansprechdruck ist vorzugsweise derart eingestellt bzw. einstellbar, dass er zwischen dem normalen Betriebsdruck und dem erhöhten Druck bei Unterbrechung des Flüssigkeitsaustritts stromabwärts des Auslasses 20 liegt. Bei einem beispielhaften Betriebsdruck von 500 bar liegt der Ansprechdruck vorzugsweise zwischen 510 bar und 650 bar.

Vorzugsweise ist die Ventilanordnung 1 bei Normalbetrieb bzw. wenn Flüssigkeit stromabwärts des Auslasses 20 austreten kann in Schließstellung - insbesondere mit geöffnetem Rückschlagventil 21 - und/oder bei Leerlaufbetrieb bzw. wenn ein Flüssigkeitsaustritt stromabwärts des Auslasses 20 gesperrt ist in Offenstellung - insbesondere mit geschlossenem Rückschlagventil 21.

In Fig. 14 ist in einer blockschaltbildartigen Ansicht eine vorschlagsgemäße Hochdruckreinigungsvorrichtung 100 dargestellt, die vorzugsweise mindestens eine vorschlagsgemäße Ventilanordnung 1 aufweist.

Beim Darstellungsbeispiel weist die Hochdruckreinigungsvorrichtung 100 vorzugsweise zwei vorschlagsgemäße Ventilanordnungen 1 auf, nämlich eine erste Ventilanordnung 1, die als Umlaufventilanordnung 1A ausgebildet ist, und eine zweite Ventilanordnung 1, die als Sicherheitsventilanordnung 1B ausgebildet ist.

Fig. 14 zeigt die Hochdruckreinigungsvorrichtung 100 im Förderbetrieb, bei dem eine Flüssigkeit, insbesondere Wasser, vorzugsweise als Strahl S, von der Hochdruckreinigungsvorrichtung 100 abgegeben wird.

Die Hochdruckreinigungsvorrichtung 100 weist vorzugsweise eine Pumpe 110, insbesondere Hochdruckpumpe, auf. Die Pumpe 110 ist vorzugweise über eine Zuleitung 120 an die Umlaufventilanordnung 1A, insbesondere deren Einlass 2, angeschlossen.

Die Hochdruckreinigungsvorrichtung 100 weist vorzugsweise eine Ventilpistole 130 auf, die insbesondere über eine Verbindungsleitung 140 an die Umlaufventilanordnung 1A, insbesondere deren Auslass 20, angeschlossen ist.

Eine Rückleitung 150 der Hochdruckreinigungsvorrichtung 100 ist vorzugsweise an die Umlaufventilanordnung 1A, insbesondere deren Ablass 3, angeschlossen.

Die Hochdruckreinigungsvorrichtung 100 ist vorzugsweise stromaufwärts der Pumpe 110 an ein Flüssigkeitsreservoir, eine Wasserleitung, ein Wasserverteilungssystem o. dgl. angeschlossen oder anschließbar (nicht dargestellt). Es ist auch möglich, dass die Hochdruckreinigungsvorrichtung 100 ein Flüssigkeitsreservoir, einen Flüssigkeitsbehälter o. dgl. aufweist.

Im Förderbetrieb der Hochdruckreinigungsvorrichtung 100 ist die Pumpe 110 eingeschaltet und die Ventilpistole 130 betätigt bzw. geöffnet. Vorzugsweise wird durch die Pumpe 110 eine Flüssigkeit, insbesondere Wasser, insbesondere aus einem Reservoir o. dgl., zur Ventilpistole gepumpt, vorzugsweise durch die Zuleitung 120, die Umlaufventilanordnung 1A und/oder die Verbindungsleitung 140. Einlass 2 und Auslass 20 der Umlaufventilanordnung 1A sind vorzugsweise fluidisch miteinander verbunden, insbesondere ist das Rückschlagventil 21 geöffnet. Über die Ventilpistole 130 wird die Flüssigkeit vorzugsweise als Strahl S abgegeben, insbesondere unter Hochdruck.

Unter "Hochdruck" ist hierbei vorzugsweise ein Druck von mindestens 50 bar oder 100 bar zu verstehen. Vorzugsweise kann mittels der Hochdruckreinigungsvorrichtung 100 ein Strahl S unter einem Druck von bis zu 500 bar oder 700 bar oder mehr abgegeben werden.

Der Betriebsdruck bzw. Arbeitsdruck der Hochdruckreinigungsvorrichtung 100 beträgt mindestens 50 bar oder 100 bar, insbesondere mindestens 300 bar, und/oder höchstens 700 bar, insbesondere höchstens 500 bar.

Der Volumenstrom der Flüssigkeit durch die Ventilanordnung 1 beträgt vorzugsweise mehr als 10 l/min, insbesondere mehr als 25 l/min, und/oder weniger als 100 l/min, insbesondere weniger als 75 l/min.

Im Förderbetrieb fließt vorzugsweise keine Flüssigkeit durch die Rückleitung 150, insbesondere ist die Umlaufventilanordnung 1A in der Schließstellung, in der Einlass 2 und Ablass 3 fluidisch getrennt sind.

Vorzugsweise ist die Sicherheitsventilanordnung 1B stromabwärts der Pumpe 110 bzw. stromaufwärts der Umlaufventilanordnung 1A bzw. zwischen der Pumpe 110 und Umlaufventilanordnung 1A bzw. an der Zuleitung 120 angeschlossen, insbesondere mit ihrem Einlass 2. Im Förderbetrieb ist die Sicherheitsventilanordnung 1B vorzugsweise in der Schließstellung, in der Einlass 2 und Ablass 3 fluidisch getrennt sind.

Die Vorspannkräfte der jeweiligen Federn 7 der Ventilanordnungen 1 sind vorzugsweise jeweils so eingestellt, dass im Förderbetrieb bzw. bei dem dann herrschenden Betriebsdruck(bereich) die Ventilanordnungen 1 in ihrer Schließstellung sind bzw. die jeweiligen Ventilelemente 6 gegen die jeweiligen Ventilsitze 5 gespannt sind.

Wird die Ventilpistole 130 - bei laufender Pumpe 110 - geschlossen, insbesondere der Strahl S unterbrochen, führt dies vorzugsweise zu einem Druckimpuls in der Verbindungsleitung 140, der den Ansprechdruck der Umlaufventilanordnung 1A überschreitet oder diesem entspricht, so dass die Umlaufventilanordnung 1A die Offenstellung einnimmt, in der der Einlass 2 und Ablass 3 fluidisch verbunden sind. Das Rückschlagventil 21 wird, insbesondere durch den Druckimpuls, vorzugsweise geschlossen bzw. die Fluidverbindung zwischen Einlass 2 und Auslass 20 unterbrochen.

Die Flüssigkeit wird vorzugsweise über die Umlaufventilanordnung 1A in die Rückleitung 150 geleitet.

Vorzugsweise wird die Flüssigkeit über die Rückleitung 150 abgeleitet oder stromaufwärts der Pumpe 110 wieder zurück in das System gespeist, beispielsweise wieder in das Reservoir geleitet.

Der Betrieb bei geschlossener Ventilpistole 130 wird auch als Leerlaufbetrieb bezeichnet. Im Leerlaufbetrieb wird die Flüssigkeit über die Pumpe 110 und die Umlaufventilanordnung 1A in die Rückleitung 150 gepumpt bzw. gefördert und/oder im Kreis gefördert.

Vorzugsweise ist die Sicherheitsventilanordnung 1B im (normalen) Leerlaufbetrieb in Schließstellung. Insbesondere ist der Ansprechdruck der Sicherheitsventilanordnung 1B derart eingestellt, dass er über dem Betriebsdruck(bereich) im Förderbetrieb und Leerlaufbetrieb liegt.

Wird die Ventilpistole 130 (wieder) geöffnet, führt dies vorzugsweise zu einem Druckabfall in der Verbindungsleitung 140 und/oder am Auslass 20 bzw. Betätigungsraum 14 der Umlaufventilanordnung 1A. Vorzugsweise führt der Druckabfall zu einer Schließbewegung des Ventilelements 6 der Umlaufventilanordnung 1A, insbesondere aufgrund der Vorspannkraft der Feder 7, so dass die Schließstellung (wieder) eingenommen wird.

Das Einnehmen der Schließstellung führt vorzugsweise zu einem Druckanstieg in der Zuleitung 120 bzw. am Einlass 2 bzw. der Einlassleitung 2A der Umlaufventilanordnung 1A, insbesondere aufgrund der Förderung der Flüssigkeit mittels der Pumpe 110, so dass sich das Rückschlagventil 21 (wieder) öffnet und Flüssigkeit (wieder) zum Auslass 20 gefördert wird, so dass diese an der Ventilpistole 130 abgegeben werden kann. Die Hochdruckreinigungsvorrichtung 100 ist dann vorzugsweise (wieder) im Förderbetrieb.

Vorzugsweise ist der Ansprechdruck der Sicherheitsventilanordnung 1B derart eingestellt, dass die Sicherheitsventilanordnung 1B auch bei kurzem Druckanstieg, verursacht durch den Wechsel zwischen Förderbetrieb und Leerlaufbetrieb oder umgekehrt, in der Schließstellung verharrt. Der Ansprechdruck liegt vorzugsweise oberhalb der bei diesen Wechseln auftretenden Drücken.

Vorzugsweise ist die Sicherheitsventilanordnung 1B bzw. deren Ansprechdruck so eingestellt, dass sie nur dann öffnet, wenn der Druck über den üblicherweise auftretenden Drücken liegt, beispielsweise 5 % oder 10 % darüber. In einem solchen Fall wird vorzugsweise wie zuvor erläutert Flüssigkeit über die Sicherheitsventilanordnung 1B aus dem System bzw. der Hochdruckreinigungsvorrichtung 100 abgeleitet bzw. entfernt, so dass der Druck wieder absinken bzw. der Überdruck abgebaut werden kann. Vorzugsweise schließt die Sicherheitsventilanordnung 1B (wieder) bei Erreichen des Schließdrucks, der vorzugsweise unterhalb des Ansprechdrucks liegt.

Die Sicherheitsventilanordnung 1B ist vorzugsweise an die Zuleitung 120 angeschlossen. Auf diese Weise wird sichergestellt, dass die Sicherheitsventilanordnung 1B sowohl im Förderbetrieb als auch im Leerlaufbetrieb auslösen bzw. öffnen kann.

Einzelne Aspekte und Merkmale der vorliegenden Erfindung können unabhängig voneinander, aber auch in verschiedenen Kombinationen realisierbar sein.

### Bezugszeichenliste:

- 1: Ventilanordnung
- 1A: Umlaufventilanordnung
- 1B: Sicherheitsventilanordnung
- 2: Einlass
- 2A: Einlassleitung
- 3: Ablass
- 3A: Ablassleitung
- 4: Hauptkörper/Gehäuse
- 4A: Ausnehmung
- 5: Ventilsitz
- 5A: Einsatz
- 6: Ventilelement
- 7: Feder
- 7A: Federdraht
- 8: Lagerelement
- 9: Lagerelement
- 10: Einstelleinrichtung
- 10A: Spannelement
- 10B: Gewindestange
- 11: Abdeckung
- 12: Zwischenelement
- 13: Betätigungsmittel
- 14: Betätigungsraum
- 15: Betätigungsabschnitt
- 16: Querschnittsverengung
- 17: Kolbenstange
- 18: Querkanal
- 19: Ablenkteil
- 20: Auslass
- 21: Rückschlagventil
- 22: Steuerkanal
- 23: Kolben

- 100: Hochdruckreinigungsvorrichtung
- 110: Pumpe
- 120: Zuleitung
- 130: Ventilpistole
- 140: Verbindungsleitung
- 150: Rückleitung

- A: Achse
- S: Strahl

## Patentansprüche

1. Ventilanordnung (1), insbesondere Umlaufventilanordnung (1A) oder Sicherheitsventilanordnung (1B), mit einem Einlass (2), einem Ablass (3) und einem zwischen Einlass (2) und Ablass (3) angeordneten Ventilsitz (5),
wobei die Ventilanordnung (1) ein Ventilelement (6) und eine Feder (7) aufweist, mittels der das Ventilelement (6), insbesondere bei Betriebsdruck, in eine Schließstellung gegen den Ventilsitz (5) mit einer Vorspannkraft vorgespannt ist, so dass eine Fluidverbindung zwischen Einlass (2) und Ablass (3) unterbrochen ist,
wobei das Ventilelement (6) in eine Offenstellung vom Ventilsitz (5) abhebbar ist, so dass Einlass (2) und Ablass (3) fluidisch miteinander verbunden sind, wenn ein Flüssigkeitsdruck in einem Betätigungsraum (14) der Ventilanordnung (1) einen Ansprechdruck überschreitet, und
wobei die Ventilanordnung (1) eine Verstelleinrichtung bzw. Einstelleinrichtung (10) aufweist, mittels der die Vorspannkraft der Feder (7) bzw. der Ansprechdruck einstellbar ist,
**dadurch gekennzeichnet,**
**dass** die Feder (7) eine Stempelfeder ist, und/oder
**dass** die Ventilanordnung (1) ein Zwischenelement (12) aufweist, über das die Vorspannkraft der Feder (7) auf das Ventilelement (6) übertragbar ist, wobei das Zwischenelement (12) gegen ein Drehen um eine Achse (A) der Feder (7) gesichert ist, und/oder
**dass** in einer Ablassleitung (3A) zwischen Ventilsitz (5) und Ablass (3) eine Querschnittsverengung (16) bzw. Düse vorgesehen ist.

2. Ventilanordnung nach Anspruch 1, **dadurch gekennzeichnet, dass** die Ventilanordnung (1) ohne Einhausung der Feder (7) ausgebildet ist.

3. Ventilanordnung nach Anspruch 1 oder 2, **dadurch gekennzeichnet, dass** die Vorspannkraft der Feder (7) durch das Zwischenelement (12) zentriert wird.

4. Ventilanordnung nach einem der voranstehenden Ansprüche, **dadurch gekennzeichnet, dass** die Querschnittsverengung (16) in der Offenstellung der Ventilanordnung (1) einen zusätzlichen Druck im Betätigungsraum (14) erzeugt, um ein Abheben des Ventilelements (6) vom Ventilsitz (5) zu unterstützen.

5. Ventilanordnung nach einem der voranstehenden Ansprüche, **dadurch gekennzeichnet, dass** die Ventilanordnung (1) derart ausgebildet ist, dass das Ventilelement (6) die Schließstellung einnimmt, wenn der Flüssigkeitsdruck einen Schließdruck unterschreitet, wobei der Schließdruck geringer ist als der Ansprechdruck.

6. Ventilanordnung nach einem der voranstehenden Ansprüche, **dadurch gekennzeichnet, dass** die Ventilanordnung (1) einen von Einlass (2) und Ablass (3) verschiedenen Auslass (20) aufweist, wobei im Normalbetrieb bzw. bei Betriebsdruck der Einlass (2) und Auslass (20) fluidisch miteinander verbunden sind.

7. Ventilanordnung nach Anspruch 6, **dadurch gekennzeichnet, dass** zwischen Einlass (2) und Auslass (20) ein Rückschlagventil (21) angeordnet ist.

8. Ventilanordnung nach einem der voranstehenden Ansprüche, **dadurch gekennzeichnet, dass** die Ventilanordnung (1) einen Kolben (23) umfasst, der dazu ausgebildet ist, bei Erreichen bzw. Überschreiten des Ansprechdrucks das Ventilelement (6) entgegen der Vorspannkraft der Feder (7) vom Ventilsitz (5) zu drücken.

9. Ventilanordnung nach einem der voranstehenden Ansprüche, **dadurch gekennzeichnet, dass** der Ansprechdruck mindestens 10 bar, vorzugsweise mindestens 20 bar, besonders bevorzugt mindestens 50 bar beträgt.

10. Hochdruckreinigungsvorrichtung (100) mit einer Ventilanordnung (1) nach einem der voranstehenden Ansprüche.
